# EUROPEAN PATENT SPECIFICATION

(11) **EP 3 367 710 B1**
(45) Date of publication and mention of the grant of the patent: **08.04.2020**
(21) Application number: 18156587.0
(22) Date of filing: 14.02.2018
(51) Int. Cl.: H04W 4/70, H04W 4/38, H04L 29/12, H04W 84/18

(54) **SENSOR MANAGEMENT MODULE, SENSOR MANAGEMENT SYSTEM, SENSOR MANAGEMENT METHOD, PROGRAM, AND NON-TRANSITORY COMPUTER READABLE STORAGE MEDIUM**
SENSORVERWALTUNGSMODUL, SENSORVERWALTUNGSSYSTEM, SENSORVERWALTUNGSVERFAHREN, PROGRAMM UND NICHTTRANSITORISCHES COMPUTERLESBARES SPEICHERMEDIUM
DISPOSITIF DE GESTION DE CAPTEURS, PROCÉDÉ DE GESTION DE CAPTEURS, PROCÉDÉ DE GESTION DE CAPTEURS, PROGRAMME ET SUPPORT D'INFORMATIONS LISIBLE PAR ORDINATEUR NON TRANSITOIRE

(30) Priority: 24.02.2017 JP 2017033878
(43) Date of publication of application: 29.08.2018
(73) Proprietor: Yokogawa Electric Corporation, Musashino-shi Tokyo 180-8750 (JP)
(72) Inventor: YOSHIKAWA, Masahide, Tokyo 180-8750 (JP); NOZAKA, Yuichi, Tokyo 180-8750 (JP)
(74) Representative: Grünecker Patent- und Rechtsanwälte PartG mbB

(56) References cited:
- CN-A- 104 359 497
- US-A1- 2011 149 767

## Description

### BACKGROUND

### Technical Fields

The present invention relates to a sensor management module, a sensor management system, a sensor management method, a program, and a non-transitory computer readable storage medium.

### Related Art

In a plant in which various kinds of equipment are provided, various sensors for measuring a predetermined physical quantity are installed in the sets of equipment disposed in the plant. In plants, an operational state of equipment and quality of products produced by the equipment are managed based on a physical quantity which is output from a sensor installed in each set of equipment or a measurement value which indicates the physical quantity.

In the past, sensors installed in sets of equipment in plants have been analog sensors having no active element. Therefore, in plants, information (measurement value) for grasping the operational state of equipment or quality of products has been obtained by performing predetermined processing with respect to an analog physical quantity measured by a sensor. In this regard, recently, sensor devices configured to integrally include a processing unit having a data processing function realized by an electric circuit or the like and a sensor have been of practical use (merchandised). In a sensor device, due to a data processing function realized by a processing unit, predetermined data processing is performed with respect to an analog physical quantity measured by a sensor, and digital data after being subjected to data processing is output as a measurement value. Such sensor devices are called smart sensors, intelligent sensors, or the like and have come into wide use, taking the place of earlier analog sensors having no active element.

Incidentally, in plants, routine inspection work and work for coping with troubles such as a malfunction and a defect are carried out with respect to each set of disposed equipment. In inspection work in plants, in addition to an inspection of an operational state of equipment, work of calibration of a sensor device and the like are also performed (refer to Japanese Unexamined Patent Application Publication No. 2012-225670). In this case, a defect is sometimes found in the sensor device, for example, measurement may not be able to be correctly performed even if calibration is performed. Deterioration (reaching lifespan), a malfunction, and the like of a sensor can be assumed to be frequent causes of a defect in a sensor device. However, sensor devices in the related art are configured to integrally include a sensor and a processing unit which realizes a data processing function. Therefore, even when a defect is caused in a sensor device due to deterioration (reaching lifespan), a malfunction, or the like of a sensor, there is a need to replace the sensor device including the processing unit. That is, when a defect occurs in a sensor device in the related art, the sensor device in its entirety with a sensor and a processing unit has to be detached from equipment and to be replaced.

In this regard, for example, as in Japanese Unexamined Patent Application Publication No. 2013-142964, a technology of a sensor device having a configuration in which a sensor and a processing unit can be separated from each other has been proposed. In the sensor device (smart sensor) disclosed in Japanese Unexamined Patent Application Publication No. 2013-142964, the sensor (liquid analysis sensor) and the processing unit (intelligence unit) are configured to be detachable and attachable via connector. That is, the sensor device (smart sensor) disclosed in Japanese Unexamined Patent Application Publication No. 2013-142964 has a configuration in which the sensor (liquid analysis sensor) and the processing unit (intelligence unit) can be separated from each other via the connector. In Japanese Unexamined Patent Application Publication No. 2013-142964, it is stated that the processing unit (intelligence unit) can be reused when the sensor (liquid analysis sensor) has reached the end of its lifespan. In addition, in Japanese Unexamined Patent Application Publication No. 2013-142964, it is stated that any type of sensor (liquid analysis sensor) can be utilized as long as the pin disposition in the connector of the processing unit (intelligence unit), and the electrical specification of a cable to which the sensor (liquid analysis sensor) and the processing unit (intelligence unit) output digital data are the same. Accordingly, in a separable sensor device in which the technology disclosed in Japanese Unexamined Patent Application Publication No. 2013-142964 is applied, when a defect is caused in the sensor device due to deterioration (lifespan), a malfunction, or the like of a sensor, the defect of the sensor device can be ameliorated by replacing only the sensor.

Incidentally, a plurality of sensor devices are installed in plants. Therefore, in plants, there is a need to manage an operational state of equipment and quality of products after grasping which set of equipment has been used to obtain a measurement value among measurement values output by the sensor devices. Therefore, in plants, for example, a measurement value output by a sensor device and equipment in which the sensor device is installed are associated with each other using identification information (so-called ID) for identifying each sensor device. Here, when a separable sensor device, in which the technology disclosed in Japanese Unexamined Patent Application Publication No. 2013-142964 is applied, is installed in each set of equipment disposed in a plant, it is assumed that, in the plant, there is a need to manage both identification information for identifying a sensor and identification information for identifying a processing unit, that is, there is a need for a sensor and a processing unit to be managed by being distinguished from each other. This is because even if the processing unit remains the same, the sensor may have been replaced due to deterioration (lifespan), a malfunction, or the like, that is, the processing unit and the sensor may have changed to a different combination, in a separable sensor device in which the technology disclosed in Japanese Unexamined Patent Application Publication No. 2013-142964 is applied. In a separable sensor device in which the technology disclosed in Japanese Unexamined Patent Application Publication No. 2013-142964 is applied, it is effective to manage a sensor and a processing unit to be distinguished from each other, when calibration, maintenance, or the like of the sensor device is performed, particularly when a replacement time is determined by grasping deterioration (lifespan) of the sensor.

However, Japanese Unexamined Patent Application Publication No. 2013-142964 does not disclose anything regarding identification information for identifying a sensor device, and a method for distinguishing a sensor and a processing unit from each other. Therefore, in plants having a separable sensor device, in which the technology disclosed in Japanese Unexamined Patent Application Publication No. 2013-142964 is applied, installed in each set of equipment, it is not possible to manage an operational state of equipment and quality of products after distinguishing a sensor and a processing unit from each other and grasping which combination of a sensor and a processing unit has been used to obtain a measurement value among measurement values output by the sensor devices.

Patent application publication US2011149767 (A1) relates to a method and system for managing node identification. Provided is a method and system for managing an identification (ID) of a widely moved sensor node. The method includes recognizing, at a gateway, a node to check an ID of the node, allocating an ID of the gateway as the ID of the node when the ID of the node checked by the gateway is null, sending the ID of the node to a management server when the ID of the node checked by the gateway is not null and is different from the ID of the gateway, and when a new ID is received from the management server, allocating the new ID as the ID of the node.

CN104359497 (A) relates to a sensor with ID (identification) and an identifying method of the sensor. The sensor comprises an ID chip, a function module and a sensor communication interface, wherein the function module is used for achieving a sensing function of the sensor, the ID chip is a read-only ID chip and at least stores an ID number of the sensor, and the function module and the ID chip are connected with a control panel through the sensor communication interface. The sensor with the ID can be quite convenient for users to use.

### SUMMARY OF THE INVENTION

It is an object of the present invention to provide a sensor management module, a sensor management system, a sensor management method, a program and a storage medium that obviate or mitigate at least one of the disadvantages and shortcomings of the related prior art.

This object is solved by the present invention as claimed in the appended independent claims. Particular embodiments of the present invention are defined by the appended dependent claims.

A sensor management module which is connectable to a sensor in a sensor device, the sensor management module may include a sensor ID reader configured to acquire sensor identification information for identifying the sensor from the sensor, and a sensor manager configured to store the sensor identification information acquired by the sensor ID reader if the sensor ID reader has acquired the sensor identification information, and the sensor manager being configured to newly generate a unique new identification information for identifying the sensor and store the new identification information as the sensor identification information if the sensor ID reader has not acquired the sensor identification information.

Further features and aspects of the present disclosure will become apparent from the following detailed description of exemplary embodiments with reference to the attached drawings.

### BRIEF DESCRIPTION OF THE DRAWINGS

FIG. 1 is a block diagram illustrating a schematic configuration of a sensor management system according to an embodiment of the present invention.
FIG. 2 is a flow chart illustrating an example of a processing procedure of managing identification information by the sensor management system according to the embodiment of the present invention.
FIG. 3 is a view schematically illustrating an example of a first state in which the identification information is managed by the sensor management system according to the embodiment of the present invention.
FIG. 4A and FIG. 4B are views schematically illustrating an example of a second state in which the identification information is managed by the sensor management system according to the embodiment of the present invention.
FIG. 5A and FIG. 5B are views schematically illustrating an example of a third state in which the identification information is managed by the sensor management system according to the embodiment of the present invention.
FIG. 6A and FIG. 6B are views schematically illustrating an example of a history of maintenance work being managed by the sensor management system according to the embodiment of the present invention.
FIG. 7 is a view schematically illustrating an example of another configuration of a sensor device in the sensor management system according to the embodiment of the present invention.
FIG. 8A and FIG. 8B are views schematically illustrating an example of another method of generating identification information in the sensor management system according to the embodiment of the present invention.

### DETAILED DESCRIPTION OF THE EMBODIMENTS

The embodiments of the present invention will be now described herein with reference to illustrative preferred embodiments. Those skilled in the art will recognize that many alternative preferred embodiments can be accomplished using the teaching of the present invention and that the present invention is not limited to the preferred embodiments illustrated herein for explanatory purposes.

An aspect of the present invention is to provide a sensor management module, a sensor management system, a sensor management method, a program, and a non-transitory computer readable storage medium which can manage a combination with a connected sensor in a separable sensor device having a configuration in which the sensor can be separated.

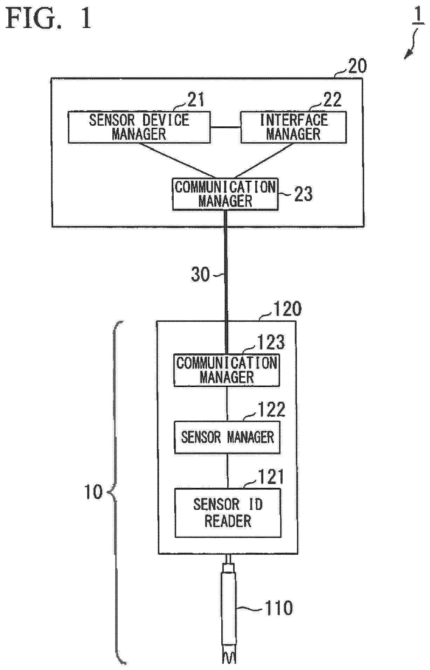

Hereinafter, an embodiment of the present invention will be described with reference to the drawings. FIG. 1 is a block diagram illustrating a schematic configuration of a sensor management system according to the embodiment of the present invention. A sensor management system 1 includes a sensor device 10 and a sensor management device 20. The sensor management system 1 operates to function for maintenance of a sensor system which measures a predetermined physical quantity in equipment disposed in a plant and outputs digital data indicating the measured physical quantity to an upper-level control system (for example, a distributed control system (DCS)) controlling an operational state of each set of equipment in the plant, as a measurement value. Examples of the plant include plants managing and controlling well sites such as gas fields and oil fields, and the surroundings thereof; plants managing and controlling power generation such as hydraulic power generation, thermal power generation, and nuclear power generation; plants managing and controlling energy harvesting such as solar power generation and wind power generation; and plants managing and controlling water supply, sewerage, and dams, in addition to industrial plants refining petroleum and producing chemical products.

In the sensor management system 1, the sensor device 10 and the sensor management device 20 are connected to each other through a communication path 30. The communication path 30 may be a signal cable transmitting a signal or may be a communication path conforming to various communication standards for wired or wireless communication. When the communication path 30 is a communication path conforming to wire communication standards, for example, various communication standards such as wire communication standards for a wired local area network (LAN) and the like, and wired interface standards for the Universal Serial Bus (USB (registered trademark)) are considered as the wire communication standards. In addition, when the communication path 30 is a communication path conforming to wireless communication standards, for example, various communication standards such as wireless communication standards for wireless LAN communication (so-called Wi-Fi (registered trademark)) and the like, short-range wireless communication standards for the Bluetooth (registered trademark) and the like, and infrared communication standards for the Infrared Data Association (IrDA (registered trademark)) and the like, are considered as the wireless communication standards.

The sensor device 10 is installed at a position in equipment disposed in the plant, where the predetermined physical quantity is measured. The sensor device 10 outputs (transmits) digital data (measurement value according to the physical quantity (analog quantity) measured in a normal operation, to the sensor management device 20 via the communication path 30. For example, the sensor device 10 is a sensor device measuring properties of liquid products such as industrial water and chemicals, or semi-finished products produced in the equipment. In the sensor management system 1, the sensor device 10 is configured to include a sensor 110 and an adapter 120 which are connected (joined) to each other through a conncctor portion (not illustrated). According to this configuration, the sensor device 10 realizes a configuration called a smart sensor, an intelligent sensor, or the like.

In addition, the sensor device 10 has a function of acquiring information of the connected sensor 110 and managing the acquired information. The sensor device 10 is activated when the sensor device 10 is connected to the sensor management device 20 after the sensor device 10 is installed in equipment, or after work entailing replacement of the sensor 110 (which will hereinafter be referred to as "sensor replacement work") is performed during maintenance work for the sensor system. The sensor device 10 starts to acquire and manage information of the connected sensor 110.

The sensor 110 is a sensor measuring the predetermined physical quantity (analog quantity), at a position in the equipment in which the sensor device 10 is installed. The sensor 110 outputs a signal indicating the physical quantity measured in a normal operation to the adapter 120. The sensor 110 illustrated in FIG. 1 is a glass tube-type hydrogen ion concentration (pH) sensor. The sensor 110 is not limited to the pH sensor as illustrated in FIG. 1. Various sensors such as an oxidation reduction potential (ORP) sensor, a conductivity sensor, a dissolved oxygen (DO) sensor, a residual chlorine sensor, and a turbidity sensor for coping with liquid substances are considered as the sensor 110. In addition, the sensor 110 is not also limited to the aforementioned sensor for measuring the physical quantity of liquid substances.

In addition, the sensor 110 is equipped with an ID chip in which sensor identification information (which will hereinafter be referred to as a "sensor ID") for identifying the sensor 110 itself is recorded. In the sensor 110, the sensor ID recorded in the ID chip is read by the adapter 120 when the sensor device 10 is activated. There are cases in which the sensor 110 is equipped with no ID chip, that is, the sensor 110 docs not have a function of outputting a sensor ID.

The adapter 120 is a processing unit generating digital data (measurement value) according to a signal which indicates the physical quantity (analog quantity) output from the sensor 110. That is, the adapter 120 is a processing unit performing predetermined data processing with respect to an analog physical quantity measured by the sensor 110 and realizing a data processing function of converting the analog physical quantity into digital data. The adapter 120 outputs digital data, which is generated (converted) based on the physical quantity output from the sensor 110 in a normal operation, to the adapter 120 via the communication path 30.

In addition, the adapter 120 is a sensor management module acquiring (reading) the sensor ID for identifying the connected sensor 110 and executing a function of managing the sensor ID. When the sensor device 10 is activated, the adapter 120 acquires (reads) the sensor ID recorded in the ID chip which the sensor 110 is equipped with. The adapter 120 outputs (transmits) the acquired sensor ID to the sensor management device 20 via the communication path 30 as identification information of the connected sensor 110. In this case, the adapter 120 also outputs (transmits) sensor management module identification information for identifying the adapter 120 itself (which will hereinafter be referred to as an "adapter ID") to the sensor management device 20, together with the sensor ID. In addition, the adapter 120 stores the acquired sensor ID in the adapter 120 and manages the stored sensor ID. When the adapter 120 outputs digital data generated (converted) in a normal operation to the sensor management device 20, the adapter 120 also outputs the identification information on each of the sensor ID and the adapter ID which are managed (stored).

As described above, there are cases in which the sensor 110 is equipped with no ID chip. That is, there are cases in which the adapter 120 cannot acquire (cannot read) the sensor ID from the sensor 110. In this case, in place of the sensor ID output when the sensor device 10 is activated, the adapter 120 outputs (transmits) a notification, which indicates that the sensor ID has not been able to be acquired (has not been able to be read) from the connected sensor 110, that is, the adapter 120 has failed in acquiring the sensor ID from the sensor 110 (which will hereinafter be referred to as a "failure notification"), to the sensor management device 20 via the communication path 30. When a sensor replacement command is output (transmitted) from the sensor management device 20 in accordance with the output (transmitted) failure notification, the adapter 120 newly generates virtual identification information for identifying the sensor 110. The adapter 120 outputs (transmits) the newly generated identification information to the sensor management device 20 as the sensor ID of the connected sensor 110. In addition, the adapter 120 stores the newly generated identification information as the sensor ID acquired from the sensor 110 and manages the stored sensor ID in a similar manner. When the adapter 120 outputs digital data generated (converted) in a normal operation to the sensor management device 20, the adapter 120 also outputs the identification information on each of the sensor ID, that is, the newly generated identification information, and the adapter ID which are managed (stored).

The adapter 120 includes a sensor ID reader 121, a sensor manager 122, and a communication manager 123. The sensor ID reader 121, the sensor manager 122, and the communication manager 123 illustrated in FIG. 1 are constituent elements for realizing functions of acquiring, storing, and managing the sensor ID of the sensor 110 executed by the adapter 120 when the sensor device 10 is activated. In addition to the constituent elements illustrated in FIG. 1, the adapter 120 includes constituent elements (not illustrated) for realizing a function of generating (converting) digital data based on the physical quantity output from the sensor 110 at the time of a normal operation and outputting the generated (converted) digital data. That is, in FIG. 1, in order to make description easy, in the constituent elements included in the adapter 120, the constituent elements which operate at only the time of a normal operation are not illustrated. The constituent elements which operate at only the time of a normal operation and are not illustrated in FIG. 1 may be the constituent elements which realize the function of each of the sensor ID reader 121, the sensor manager 122, and the communication manager 123 illustrated in FIG. 1. In other words, the functions of acquiring, storing, and managing the sensor ID realized by the constituent elements including the sensor ID reader 121, the sensor manager 122, and the communication manager 123 illustrated in FIG. 1 may be a part of functions provided in the constituent elements for realizing the functions of generating (converting) digital data in a normal operation and outputting the generated (converted) digital data. In the description below, focusing on the function of managing the sensor ID of the sensor 110 in the adapter 120, functions and operations of each of the constituent elements included in the adapter 120 will be described.

The sensor ID reader 121 reads the sensor ID recorded in the ID chip which the sensor 110 is equipped with, in accordance with an instruction to read the sensor ID output from the sensor manager 122 when the sensor device 10 is activated. The sensor ID reader 121 outputs the sensor ID read from the sensor 110 to the sensor manager 122. When the sensor 110 is configured to be equipped with no ID chip, the sensor ID reader 121 cannot read the sensor ID from the sensor 110. In this case, the sensor ID reader 121 notifies the sensor manager 122 that the sensor ID has not been able to be read from the sensor 110.

The above-described function of the sensor ID reader 121 reading the sensor ID may be a part of functions provided in the constituent element which acquires the physical quantity measured by the sensor 110 in a normal operation.

The sensor manager 122 outputs an instruction to read the sensor ID to the sensor ID reader 121 when the sensor device 10 is activated. The sensor manager 122 stores the sensor ID output from the sensor ID reader 121 in accordance with the instruction to read the sensor ID and manages the stored sensor ID. In addition, the sensor manager 122 also stores the adapter ID. The sensor manager 122 stores the sensor ID output from the sensor ID reader 121. Thereafter, the sensor manager 122 outputs the stored sensor ID and adapter ID to the communication manager 123 and causes the communication manager 123 to output (transmit) the sensor ID and the adapter ID to the sensor management device 20 via the communication path 30.

In addition, when the notification indicating that the sensor ID has not been able to be read is output from the sensor ID reader 121 in accordance with an instruction to read the sensor ID output when the sensor device 10 is activated, the sensor manager 122 outputs the stored adapter ID and a failure notification to the communication manager 123 and causes the communication manager 123 to output (transmit) the stored adapter ID and the failure notification to the sensor management device 20 via the communication path 30. When a sensor replacement command output (transmitted) from the sensor management device 20 via the communication path 30 is output from the communication manager 123, the sensor manager 122 generates new identification information for identifying the sensor 110 of which the sensor ID has not been able to be read, as the sensor ID. In this case, the sensor manager 122 generates unique identification information (sensor ID) such that the new identification information to be generated docs not become the same as the sensor ID that has been acquired from the connected sensor 110 in the past or the sensor ID that has been generated to identify the connected sensor 110 of which the sensor ID has not been able to be read in the past. When a sensor replacement command output (transmitted) from the sensor management device 20 indicates that the sensor 110 has not been replaced, that is, the same sensor 110 is being connected, the sensor manager 122 does not newly generate identification information (sensor ID) and causes the current sensor ID which has already been stored to be newly generated identification information (sensor ID). The sensor manager 122 stores the newly generated sensor ID as the sensor ID of the connected sensor 110 and manages the stored sensor ID. The sensor manager 122 stores the generated sensor ID. Thereafter, the sensor manager 122 outputs the adapter ID and the stored sensor ID, that is, the newly generated identification information to the communication manager 123 and causes the communication manager 123 to output (transmit) the adapter ID and the stored sensor ID to the sensor management device 20 via the communication path 30.

The above-described functions of the sensor manager 122 acquiring the sensor ID from the sensor 110, generating new identification information (sensor ID), and storing and managing the sensor ID may be a part of functions provided in the constituent element which realizes the data processing function of generating (converting) digital data based on the physical quantity output from the sensor 110 in a normal operation. In addition, the above-described functions of the sensor manager 122 may be a part of functions provided in the constituent element which controls the operation, the physical quantity measuring conditions, and the like of the sensor 110 in accordance with a command from the sensor management device 20 in a normal operation.

The communication manager 123 outputs (transmits) the information output from the sensor manager 122, that is, the sensor ID, the adapter ID, or the failure notification to the sensor management device 20 via the communication path 30. In addition, the communication manager 123 acquires (receives) a sensor replacement command output (transmitted) from the sensor management device 20 via the communication path 30 and outputs the acquired (received) sensor replacement command to the sensor manager 122.

The above-described function of the communication manager 123 exchanging information with the sensor management device 20 via the communication path 30 may be a part of functions provided in the constituent clement which outputs (transmits) digital data generated (converted) in a normal operation and acquires (receives) a command that is output (transmitted) from the sensor management device 20 for the operation, the physical quantity measuring conditions, and the like with respect to the sensor 110.

The sensor management device 20 is installed near the position at which the sensor device 10 is installed in the equipment disposed in the plant. In a normal operation, the sensor management device 20 acquires (receives) digital data that is output (transmitted) from the corresponding sensor device 10 via the communication path 30. In this case, the sensor management device 20 manages each piece of the acquired digital data based on the sensor ID and the adapter ID that are output (transmitted) from the sensor device 10 together with the digital data. The sensor management device 20 outputs (transmits) the digital data acquired (received) from the sensor device 10, the history of the digital data, and the like to the upper-level control system, for example, a distributed control system, via a communication network established in the plant. For example, various communication standards and methods including industrial wireless standards such as ISA 100.11a, wireless standards for a sensor network system or the like, communication standards for wireless/wire combined communication such as the Wireless/Wired HART (registered trademark), communication standards for master/slave-mode communication such as the MODBUS (registered trademark), and field bus standards such as the FOUNDATION (registered trademark) field bus and the Process Field Bus (PROFIBUS (registered trademark)) are considered as the communication standards when the sensor management device 20 outputs (transmits) the digital data, the history of the digital data, and the like to the upper-level control system.

In addition, the sensor management device 20 has a function of managing a history of maintenance work for the sensor system. In regard to management of a history of maintenance work in the sensor management device 20, the history of maintenance work is managed for each sensor device 10 (more specifically, for each adapter ID, in other words, for each adapter 120) based on the sensor ID and the adapter ID that are output (transmitted) from the sensor device 10. Therefore, in the sensor management device 20, when sensor replacement work is carried out during maintenance work for the sensor system, the combination of the sensor 110 and the adapter 120 in the sensor device 10 is updated based on the sensor ID and the adapter ID that are output (transmitted) via the communication path 30 when the sensor device 10 is activated.

The sensor management device 20 includes a sensor device manager 21, an interface (I/F) manager 22, and a communication manager 23. The sensor device manager 21, the interface manager 22, and the communication manager 23 illustrated in FIG. 1 are the constituent elements for realizing functions of acquiring, storing, and managing the sensor ID and the adapter ID output (transmitted) via the communication path 30 when the sensor device 10 is activated. In addition to the constituent elements illustrated in FIG. 1, the sensor management device 20 includes a constituent element (not illustrated) for realizing a function of managing digital data that is output (transmitted) from the sensor device 10 at the time of a normal operation, based on the sensor ID and the adapter ID. That is, in FIG. 1, in order to make description easy, in the constituent elements included in the sensor management device 20, the constituent elements which operate at only the time of a normal operation are not illustrated. The constituent elements which operate at only the time of a normal operation and are not illustrated in FIG. 1 may be the constituent elements which realize the function of each of the sensor device manager 21, the interface manager 22, and the communication manager 23 illustrated in FIG. 1. In other words, the functions of acquiring, storing, and managing the sensor ID and the adapter ID realized by the constituent elements including the sensor device manager 21, the interface manager 22, and the communication manager 23 illustrated in FIG. 1 may be a part of functions provided in the constituent elements for realizing the function of managing digital data based on the sensor ID and the adapter ID in a normal operation. In the description below, focusing on the function of the sensor management device 20 managing the combination of the sensor 110 and the adapter 120 in the sensor device 10 which is activated by being connected to the sensor management device 20 after sensor replacement work is carried out, functions and operations of each of the constituent elements included in the sensor management device 20 will be described.

The communication manager 23 acquires (receives) information that is output (transmitted) when the sensor device 10 is activated, that is, the sensor ID and the adapter ID or a failure notification, and outputs the acquired (received) information to the sensor device manager 21. In addition, when a sensor replacement command according to the acquired failure notification is output from the sensor device manager 21, the communication manager 23 outputs (transmits) this sensor replacement command to the sensor device 10 via the communication path 30.

The above-described function of the communication manager 23 exchanging information with the sensor device 10 via the communication path 30 may be a part of functions provided in the constituent element which acquires (receives) digital data that is output (transmitted) from the sensor device 10 in a normal operation or outputting (transmitting) a command for the operation, the physical quantity measuring conditions, and the like with respect to the sensor 110. In addition, the above-described function of the communication manager 23 may be a part of functions provided in the constituent element which outputs (transmits) the digital data acquired (received) from the sensor device 10 in a normal operation, the history of the digital data, and the like to the upper-level control system, for example, a distributed control system, via the communication network established in the plant.

The sensor device manager 21 stores the sensor ID and the adapter ID that are output from the communication manager 23, that is, that arc output (transmitted) when the sensor device 10 is activated and manages the stored sensor ID and adapter ID. In this case, the sensor device manager 21 identifies the sensor device 10 based on the stored sensor ID and adapter ID and manages the history of maintenance work for each adapter ID of the sensor device 10. The sensor device manager 21 outputs the managing the history of maintenance work to the interface manager 22 and causes the interface manager 22 to display the history of maintenance work.

When the adapter ID of the sensor ID and the adapter ID that are output (transmitted) when the sensor device 10 is activated is the same as the adapter ID of the same sensor device 10 which has already been stored, the sensor device manager 21 changes the sensor ID associated with this adapter ID to the sensor ID that is output (transmitted) through the present activation of the sensor device 10. However, when a failure notification is output (transmitted) from the sensor device 10, the sensor device manager 21 docs not change the sensor ID associated with the adapter ID and outputs a display instruction to the interface manager 22 such that the interface manager 22 displays a display screen for urging a worker carrying out sensor replacement work to perform an operation of inputting required information for outputting a sensor replacement command (which will hereinafter be referred to as a "sensor replacement operation"). The sensor replacement operation is an operation of inputting information which indicates whether or not at least the sensor 110 has been replaced. When information indicating that the sensor replacement operation has been performed is output from the interface manager 22, the sensor device manager 21 outputs a sensor replacement command to the communication manager 23 based on the information input through the sensor replacement operation and causes the communication manager 23 to output (transmit) the sensor replacement command to the sensor device 10 via the communication path 30. Thereafter, when new identification information generated by the sensor device 10 in accordance with the output (transmitted) sensor replacement command is output (transmitted) as the sensor ID, the sensor device manager 21 changes the sensor ID associated with the adapter ID to new identification information (sensor ID).

In regard to changing the sensor ID associated with the adapter ID, instead of deleting the sensor ID associated with the adapter ID which has already been stored and replacing the deleted sensor ID with a new sensor ID that is output (transmitted) through the present activation of the sensor device 10, association between the adapter ID and the sensor ID is updated by adding the new sensor ID and changing only association with the adapter ID. Accordingly, the sensor device manager 21 can perform succeeding management of the history of maintenance work for each sensor device 10 including the previous sensor ID which has been associated with the adapter ID. In this manner, the sensor device manager 21 changes the sensor ID associated with the adapter ID and performs succeeding management of the history of maintenance work for each sensor device 10. In the description below, adding a new sensor ID and changing only association with the adapter ID are referred to as an update of the association between the adapter ID and the sensor ID or the combination of the sensor 110 and the adapter 120 configuring the sensor device 10.

In a normal operation, the sensor management device 20 identifies the sensor device 10 based on the updated information on the association between the sensor ID and the adapter ID and manages digital data that is output (transmitted) from the sensor device 10, or the history of digital data for each sensor device 10. The above-described functions of the sensor device manager 21 storing and managing the sensor ID and the adapter ID may be a part of functions provided in the constituent element which realizes the function of managing digital data that is output (transmitted) from the sensor device 10, or the history of digital data for each sensor device 10, in a normal operation. In addition, the above-described function of the sensor management device 20 may be a part of functions provided in the constituent element which realizes the function of outputting a command according to controlling such as the operation, the physical quantity measuring conditions, and the like of the sensor 110 performed through an operation of a worker, in a normal operation.

The interface manager 22 generates a display screen for presenting the history of maintenance work managed by the sensor device manager 21 to a worker and displays the generate display screen. For example, the interface manager 22 includes a display device such as a liquid crystal display (LCD). In addition, the interface manager 22 includes, for example, buttons and switches for receiving an operation of a worker (sensor replacement operation). When a sensor replacement operation by a worker is received, the interface manager 22 outputs information indicating the received sensor replacement operation to the sensor device manager 21.

The interface manager 22 may be the same constituent element as the constituent element which generates and displays a display screen for presenting digital data or the history of digital data to a worker in a normal operation and receives an operation of a worker. In addition, for example, the interface manager 22 may be configured to be a touch panel in which a display device such as a liquid crystal display, and a detection device which is provided inside the display device and detects various touch operations such as tapping and flicking of a worker by means of a press sensor, for example, are combined.

In the configuration of the sensor management system 1 illustrated in FIG. 1, the sensor management device 20 is illustrated to have a configuration which is provided as a part of functions in the constituent element for realizing the function of a normal operation in the sensor system. However, the configuration of the sensor management device 20 is not limited to the configuration illustrated in FIG. 1. For example, the sensor management device 20 may be a constituent element which is realized only when sensor replacement work is carried out, through a portable terminal apparatus (maintenance terminal apparatus) utilized by a worker carrying out routine inspection work, maintenance work, and work coping with troubles in the equipment, such as a malfunction and a defect with respect to each set of equipment disposed in the plant. In this case, when sensor replacement work is carried out, the worker connects the maintenance terminal apparatus to the sensor device 10, that is, connects a communication functioning portion included in the maintenance terminal apparatus and the communication manager 123 included in the adapter 120 with each other. Accordingly, the sensor device 10 is activated, and each of the above-described functions operates between the maintenance terminal apparatus and the sensor device 10, thereby updating the association between the adapter ID and the sensor ID. As described above, in the sensor system, in a normal operation, the sensor device 10 is identified based on the updated sensor ID and adapter ID, and digital data that is output (transmitted) from the sensor device 10 and the history of digital data are managed for each sensor device 10. Therefore, information on the combination of the sensor 110 and the adapter 120 in the sensor device 10 updated after sensor replacement work is carried out needs to be able to be also utilized in a normal operation. In regard to updating the information on the combination of the sensor 110 and the adapter 120 in the sensor device 10, for example, the maintenance terminal apparatus may update the information by connecting the maintenance terminal apparatus and the sensor management device 20 with each other at the end of sensor replacement work, or the upper-level control system may update information in the sensor management device 20 by transmitting the updated information from the maintenance terminal apparatus to the upper-level control system.

According to such a configuration, in the sensor management system 1, when the sensor 110 is replaced through sensor replacement work, information on the combination of the sensor 110 and the adapter 120 is updated. Furthermore, in the sensor management system 1, when the sensor 110 is equipped with no ID chip in which the sensor ID for identifying the sensor 110 itself is recorded, the adapter 120 newly generates virtually unique identification information (sensor ID) for identifying the sensor 110. Accordingly, in the sensor management system 1, the sensor device 10 can be managed by means of the combination of the sensor 110 and the adapter 120 regardless of whether or not the sensor 110 is equipped with an ID chip. In other words, in the sensor management system 1, the sensor device 10 can be managed by means of the combination of the sensor 110 and the adapter 120 regardless of whether or not the adapter 120 can acquire the identification information (sensor ID) for identifying the sensor 110, from the sensor 110.

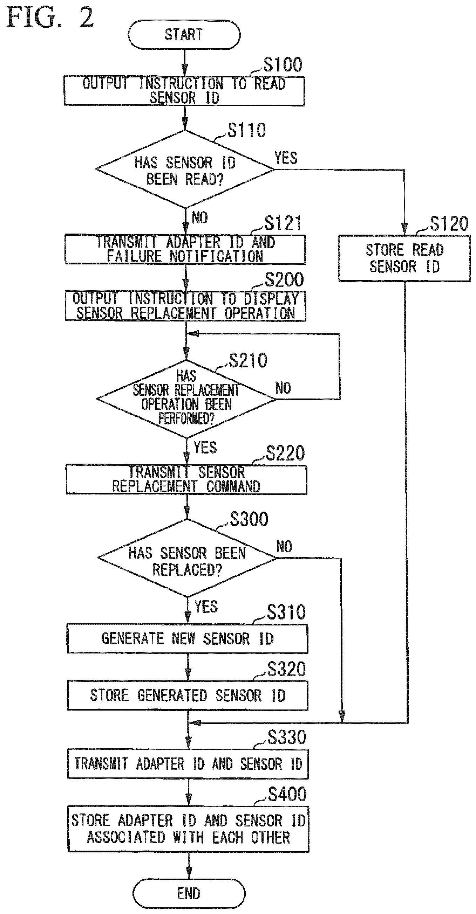

Next, a procedure of processing in the sensor management system 1 performed for managing the combination of the sensor 110 and the adapter 120 in the sensor device 10 when the sensor device 10 is activated will be described. FIG. 2 is a flow chart illustrating an example of a processing procedure of managing identification information (sensor ID) by the sensor management system 1 according to the embodiment of the present invention, that is, the combination of the sensor 110 and the adapter 120 in the sensor device 10. The processing of managing the sensor ID by the sensor management system 1 illustrated in FIG. 2 (which will hereinafter be referred to as the "sensor ID management processing") starts when the sensor device 10 and the sensor management device 20 are connected to each other and the sensor device 10 is activated after the sensor device 10 is installed in equipment or after maintenance work is carried out with respect to the sensor device 10.

When the sensor device 10 is activated and the sensor ID management processing starts, first, the sensor manager 122 included in the adapter 120 outputs an instruction to read the sensor ID to the sensor ID reader 121 (Step S100). Accordingly, the sensor ID reader 121 included in the adapter 120 reads the sensor ID recorded in the ID chip which the sensor 110 is equipped with, in accordance with the instruction to read the sensor ID output from the sensor manager 122.

Subsequently, the sensor ID reader 121 determines whether or not the sensor ID has been read from the sensor 110 (Step S110). When the sensor ID is read from the sensor 110 as a result of the determination in Step S110, ("YES" in Step S110), the sensor ID reader 121 outputs the sensor ID read from the sensor 110 to the sensor manager 122. Accordingly, the sensor manager 122 stores the sensor ID read from the sensor 110 by the sensor ID reader 121 (Step S120). The sensor ID management processing of the sensor manager 122 proceeds to Step S330.

Meanwhile, as a result of the determination in Step S110, when the sensor ID cannot be read from the sensor 110 ("NO" in Step S110), the sensor ID reader 121 notifies the sensor manager 122 that the sensor ID has not been able to be read from the sensor 110. Accordingly, the sensor manager 122 outputs the stored adapter ID and a failure notification to the communication manager 123 included in the adapter 120 and causes the communication manager 123 to output (transmit) the stored adapter ID and the failure notification to the sensor device manager 21 included in the sensor management device 20 via the communication path 30 and the communication manager 23 which is included in the sensor management device 20 (Step S121).

When the failure notification is output (transmitted) from the sensor manager 122, the sensor device manager 21 outputs a display instruction to the interface manager 22 such that the interface manager 22 displays a display screen for urging a worker to perform the sensor replacement operation (Step S200). Thereafter, the sensor device manager 21 determines whether or not the sensor replacement operation has been performed by the worker, that is, whether or not information indicating that the sensor replacement operation has been performed has been output from the interface manager 22 included in the sensor management device 20 (Step S210). When the sensor replacement operation has not been performed by the worker as a result of the determination in Step S210 ("NO" in Step S210), the sensor device manager 21 returns to Step S210 and stands by until the sensor replacement operation is performed by the worker.

Meanwhile, when the sensor replacement operation has been performed by the worker as a result of the determination in Step S210 ("YES" in Step S210), the sensor device manager 21 outputs a sensor replacement command according to the information indicating that the sensor replacement operation has been performed, to the communication manager 23 from the interface manager 22 and causes the communication manager 23 to output (transmit) the sensor replacement command to the sensor manager 122 via the communication path 30 and the communication manager 123 (Step S220).

When a sensor replacement command is output (transmitted) from the sensor device manager 21, the sensor manager 122 determines whether or not the sensor replacement command indicates that the sensor 110 has been replaced (Step S300). When the sensor replacement command indicates that the sensor 110 has not been replaced as a result of the determination in Step S300 ("NO" in Step S300), the sensor manager 122 causes the sensor ID management processing to proceed to Step S330.

Meanwhile, when the sensor replacement command indicates that the sensor 110 has been replaced as a result of the determination in Step S300 ("YES" in Step S300), the sensor manager 122 generates new identification information (sensor ID) for identifying the sensor 110 of which the sensor ID has not been able to be read (Step S310).

Subsequently, the sensor manager 122 stores the newly generated sensor ID as the sensor ID of the connected sensor 110 (Step S320).

Thereafter, the sensor manager 122 outputs the stored adapter ID and the sensor ID to the communication manager 123 and causes the communication manager 123 to output (transmit) the stored adapter ID and the sensor ID to the sensor device manager 21 via the communication path 30 and the communication manager 23 (Step S330). The sensor ID output (transmitted) to the sensor device manager 21 by the sensor manager 122 in this Step S330 is the sensor ID read from the sensor 110 stored in Step S120, for example, any one of the sensor ID that has been newly generated and has already been stored for identifying the sensor 110 of which the sensor ID has not been able to be read previously, or the sensor ID that is generated in the present Step S310 and has been stored in Step S120.

When the adapter ID and the sensor ID are output (transmitted) from the sensor manager 122, the sensor device manager 21 updates the sensor ID associated with the adapter ID to the sensor ID that is output (transmitted) at this time, and the sensor device manager 21 stores information on the adapter ID and the updated sensor ID associated with each other (Step S400).

According to such processing (sensor ID management processing), in the sensor management system 1, for example, when the sensor 110 is replaced through sensor replacement work, the information on the combination of the sensor 110 and the adapter 120 can be stored (updated). That is, in the sensor management system 1, it is possible to store (update) the information on the combination of the sensor 110 and the adapter 120 through the sensor ID management processing regardless of whether or not the sensor 110 configuring the sensor device 10 is equipped with an ID chip. Accordingly, in the sensor management system 1, the sensor device manager 21 can perform succeeding management of the sensor device 10 with the current combination of the sensor 110 and the adapter 120.

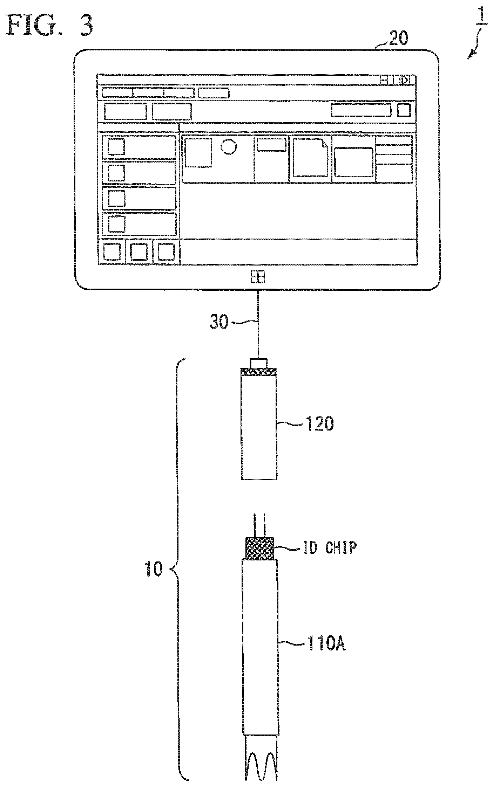

Next, an example of management of the sensor ID, that is, the sensor ID management processing of the sensor management system 1 will be described. First, an example of the sensor ID management processing when the sensor 110 equipped with an ID chip is connected (joined) to the adapter 120 will be described. FIG. 3 is a view schematically illustrating an example of a first state in which the identification information is managed by the sensor management system 1 according to the embodiment of the present invention. FIG 3 schematically illustrates a state in which a sensor 110A equipped with an ID chip is connected (joined) to the adapter 120 in the sensor management system 1.

When the sensor device 10 is activated in a state in which the sensor 110A equipped with the ID chip is connected (joined) to the adapter 120 via a connector portion (not illustrated), the adapter 120 reads and stores the sensor ID of the connected sensor 110A in the sensor ID management processing (refer to Step S100 to Step S120). The adapter 120 outputs (transmits) the adapter ID and the stored (read) sensor ID to the sensor management device 20 via the communication path 30 (refer to Step S330). Accordingly, the sensor management device 20 causes the adapter ID and the sensor ID output (transmitted) from the adapter 120 to be associated with each other and stores the adapter ID and the sensor ID (refer to Step S400), thereby performing succeeding management with the combination of the sensor 110A and the adapter 120.

In regard to the sensor ID management processing when the sensor 110 equipped with the ID chip is connected (joined) to the adapter 120, the processing performed when the sensor system is established in equipment disposed in the plant, that is, when the sensor device 10 is newly installed in equipment, and the processing performed when sensor replacement work is carried out during maintenance work for the sensor system are similar to each other. In the sensor system, when the sensor 110 connected to the adapter 120 is the sensor 110 equipped with the ID chip, it is possible to easily cause the adapter ID and the sensor ID to be associated with each other and to perform succeeding management of the combination of the sensor 110 and the adapter 120. For example, as identification information for identifying the sensor device 10 (which will hereinafter be referred to as a "sensor device ID") in which the sensor 110 and the adapter 120 are combined, it is possible to perform succeeding management with the identification information in which the adapter ID and the sensor ID are bound.

Subsequently, an example of the sensor ID management processing in which the sensor 110 equipped with no ID chip is connected (joined) to the adapter 120 will be described. In regard to the sensor ID management processing when the sensor 110 equipped with no ID chip is connected (joined) to the adapter 120, the processing performed when the sensor system is established in equipment disposed in the plant (when the sensor device 10 is newly installed in equipment), and the processing performed when sensor replacement work is carried out during maintenance work for the sensor system are different from each other, due to the difference whether or not the sensor ID which has been previously generated or read is stored in the adapter 120 (more specifically, in the sensor manager 122).

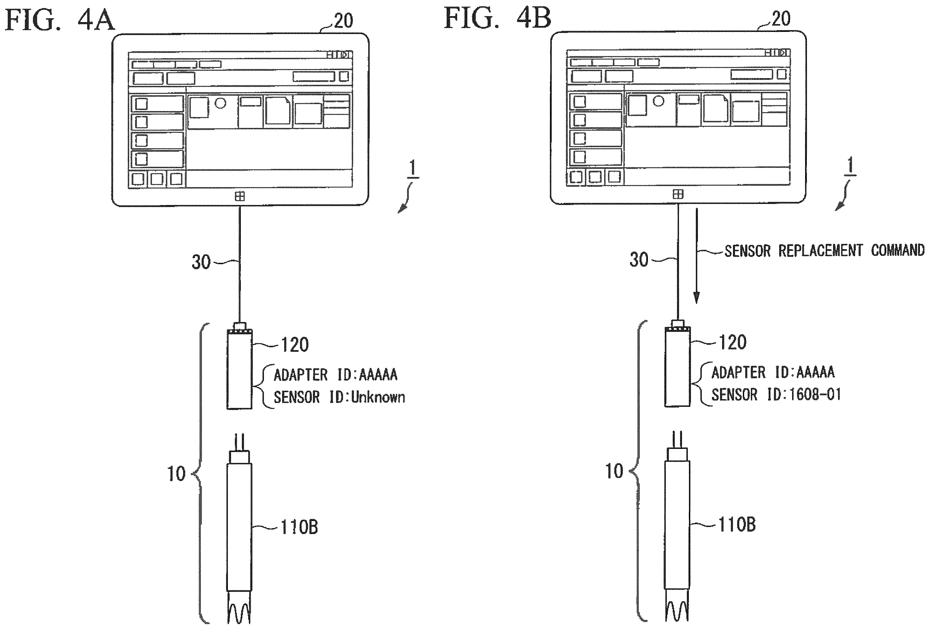

First, an example of the sensor ID management processing when the sensor device 10 in which the sensor 110 equipped with no ID chip is connected (joined) to the adapter 120 is newly installed in equipment will be described. FIG. 4A and FIG. 4B are views schematically illustrating an example of a second state in which the identification information is managed by the sensor management system 1 according to the embodiment of the present invention. FIG. 4A and FIG. 4B schematically illustrate a state in which a sensor 110B equipped with no ID chip is connected (joined) to the adapter 120 in the sensor management system 1.

When the sensor device 10 is activated in a state in which the sensor 110B equipped with no ID chip is connected (joined) to the adapter 120 via a connector portion (not illustrated), the adapter 120 outputs a failure notification for notifying that the sensor ID of the connected sensor 110B has not been able to be read to the sensor management device 20 via the communication path 30 in the sensor ID management processing (refer to Step S100, Step S110, and Step S121). In this case, for example, as illustrated in FIG. 4A, the adapter ID is stored in the adapter 120 as adapter ID=AAAAA. This adapter ID is the identification information of the adapter 120 which is uniquely assigned and set when the adapter 120 is manufactured and shipped, that is, at the time of product shipping. In addition, for example, as illustrated in FIG. 4A, the sensor ID is stored as the sensor ID=Unknown.

The sensor management device 20 outputs (transmits) a sensor replacement command according to the failure notification that is output (transmitted) from the adapter 120, to the adapter 120 via the communication path 30 (refer to Step S200 to Step S220). Accordingly, the adapter 120 generates and stores a new sensor ID for identifying the sensor 110B (refer to Step S300 to Step S320). In this case, for example, as illustrated in FIG. 4B, the adapter ID is stored in the adapter 120 as adapter ID=AAAAA. As described above, since this adapter ID is the identification information which is uniquely assigned and set at the time of product shipping of the adapter 120, there will be no change in the adapter ID. In addition, for example, as illustrated in FIG. 4B, the sensor ID is stored as sensor ID=1608-01. This sensor ID is a sensor ID generated for the adapter 120 to identify the sensor 110B in Step S310 and is configured to be "two-digit year of A.D."+"month"+"-"+"branch number" in the example illustrated in FIG. 4B. In this manner, when a new sensor ID is generated, the adapter 120 can generate a unique sensor ID by combining information on the date and time. The method in which the adapter 120 generates a new sensor ID is not limited to the above-described example. Any method may be employed as long as a unique sensor ID can be generated.

The adapter 120 outputs (transmits) the adapter ID and the stored (generated) sensor ID to the sensor management device 20 via the communication path 30 (refer to Step S330). Accordingly, the sensor management device 20 causes the adapter ID and the sensor ID output (transmitted) from the adapter 120 to be associated with each other and stores the adapter ID and the sensor ID (refer to Step S400). Then, the sensor management device 20 performs succeeding management corresponding to the sensor device 10 with the combination of the sensor 110B and the adapter 120. For example, the sensor management device 20 performs succeeding management while having "AAAAA1608-01" obtained by binding adapter ID=AAAAA output (transmitted) from the adapter 120, and sensor ID=1608-01, as the sensor device ID of the sensor device 10 in which the sensor 110B and the adapter 120 are combined.

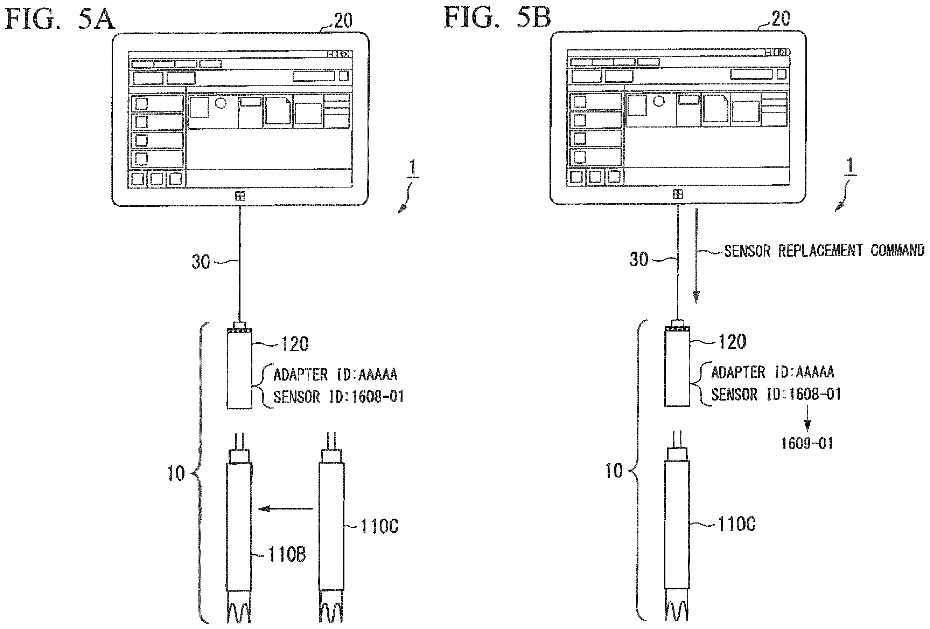

Subsequently, an example of the sensor ID management processing when the sensor 110 of the sensor device 10 in which the sensor 110 equipped with no ID chip is connected (joined) to the adapter 120 is replaced with another sensor 110 equipped with no ID chip during sensor replacement work will be described. FIG. 5A and FIG. 5B are views schematically illustrating an example of a third state in which the identification information is managed by the sensor management system 1 according to the embodiment of the present invention. FIG. 5A and FIG. 5B are schematically illustrate a state in which the sensor 110B that is equipped with no ID chip and is connected (joined) to the adapter 120 is replaced with a sensor 110C equipped with no ID chip in the sensor management system 1.

When the sensor device 10 is activated in a state in which the sensor 110B equipped with no ID chip is replaced and the sensor 110C equipped with no ID chip is connected (joined) to the adapter 120 via a connector portion (not illustrated), the adapter 120 outputs a failure notification for notifying that the sensor ID of the connected sensor 110C has not been able to be read to the sensor management device 20 via the communication path 30 in the sensor ID management processing (refer to Step S100, Step S110, and Step S121). In this case, the adapter 120 does not change (update) the stored sensor ID. That is, for example, as illustrated in FIG. 5A, the sensor ID stored in the adapter 120 remains as sensor ID=1608-01.

The sensor management device 20 outputs (transmits) a sensor replacement command according to the failure notification that is output (transmitted) from the adapter 120, to the adapter 120 via the communication path 30 (refer to Step S200 to Step S220), In this case, the adapter 120 generates and stores (updates) a new sensor ID for identifying the sensor 110C when a sensor replacement command output (transmitted) from the sensor management device 20 indicates that the sensor 110B has been replaced (refer to Step S300 to Step S320). Accordingly, for example, as illustrated in FIG. 5B, the sensor ID stored in the adapter 120 changes (is updated) to sensor ID=1609-01. In the example illustrated in FIG. 5B, similar to the sensor ID of the sensor 110B, the sensor ID of the sensor 110C generated and stored (updated) in the adapter 120 is also configured to "two-digit year of A.D."+"month"+"-"+"branch number".

The adapter 120 outputs (transmits) the adapter ID and the stored (updated) sensor ID to the sensor management device 20 via the communication path 30 (refer to Step S330). Accordingly, the sensor management device 20 causes the adapter ID and the sensor ID output (transmitted) from the adapter 120 to be associated with each other and stores (updates) the adapter ID and the sensor ID (refer to Step S400). Then, the sensor management device 20 performs succeeding management corresponding to the sensor device 10 with the combination of the sensor 110C and the adapter 120. For example, similar to the sensor device 10 in which the sensor 110B and the adapter 120 are combined, the sensor management device 20 performs succeeding management corresponding to the sensor device 10 in which the sensor 110C and the adapter 120 are combined, with sensor device ID=AAAAA1609-01 obtained by binding adapter ID=AAAAA output (transmitted) from adapter 120, and sensor ID=1609-01.

When a sensor replacement command output (transmitted) from the sensor management device 20 indicates that the sensor 110B has not been replaced, the adapter 120 determines that the currently connected sensor 110 is the sensor 110B (refer to "NO" in Step S300) and does not generate a new sensor ID. Accordingly, the sensor ID stored in the adapter 120 remains as the sensor ID of the sensor 110B. Even in this case, the adapter 120 outputs (transmits) the adapter ID and the stored (not updated) sensor ID to the sensor management device 20 via the communication path 30 (refer to Step S330). Accordingly, the sensor management device 20 causes the adapter ID and the sensor ID output (transmitted) from the adapter 120 to be associated with each other and stores the adapter ID and the sensor ID (refer to Step S400). In this case, the sensor management device 20 does not have to change (update) the association between the adapter ID and the sensor ID. Subsequently, the sensor management device 20 performs succeeding management corresponding to the sensor device 10 in which the sensor 110B and the adapter 120 are combined, with sensor device ID=AAAAA1608-01 obtained by binding adapter ID=AAAAA and sensor ID=1608-01.

In this manner, in the sensor management system 1, even when a sensor 110 equipped with no ID chip is replaced with another sensor 110 equipped with no ID chip during sensor replacement work, the information on the combination of the sensor 110 and the adapter 120 can be updated. That is, in separable sensor devices in the related art, even though a sensor is replaced, management has been performed as the same sensor device. However, in the sensor management system 1, the information on the combination of the sensor 110 and the adapter 120 can be updated every time the sensor device 10 is replaced. In the sensor management system 1, when the sensor 110 is not replaced, the information on the combination of the sensor 110 and the adapter 120 is not updated. Accordingly, in the sensor management system 1, the sensor management device 20 can perform succeeding management with the sensor device ID of the sensor device 10 in which the current sensor 110 and the adapter 120 are combined.

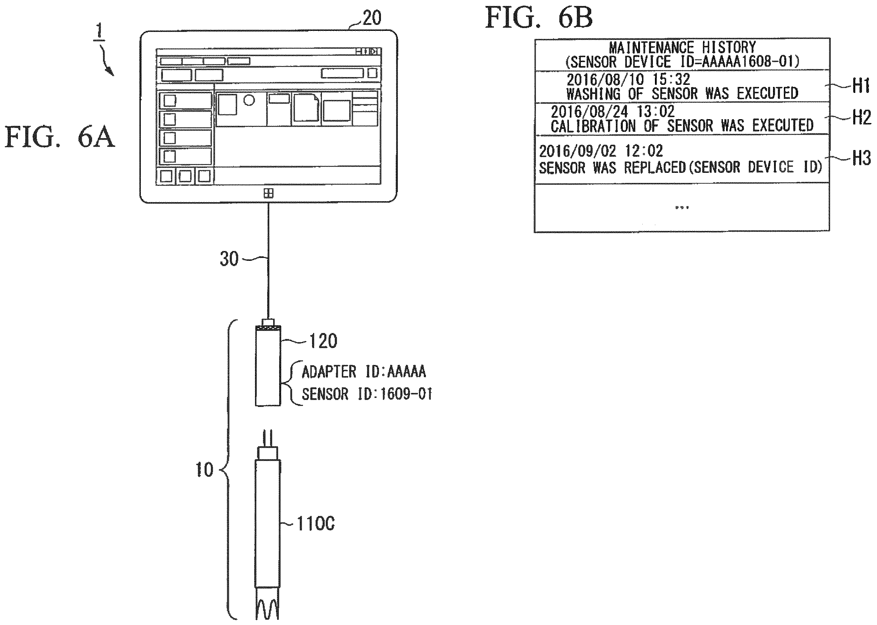

Next, an example of a history of maintenance work managed for each sensor device 10 by the sensor management system 1 will be described. FIG. 6A and FIG. 6B are views schematically illustrating an example of history of maintenance work being managed by the sensor management system 1 according to the embodiment of the present invention. FIG. 6A and FIG. 6B illustrate an example of history of maintenance work with respect to the sensor 110B connected to the adapter 120 before the sensor 110C which is currently connected to the adapter 120.

As illustrated in FIG. 6A, the sensor 110 currently connected to the adapter 120 is the sensor 110C. Therefore, the sensor ID stored in the adapter 120 is the sensor ID generated for identifying the sensor 110C. However, as described above, the sensor management device 20 manages history of maintenance work for each adapter ID of the sensor device 10. In the sensor management device 20, the sensor device manager 21 manages history of maintenance work for each sensor device 10 including the previous sensor ID associated with the same adapter ID, that is, the sensor 110 previously connected (joined) to the adapter 120. Therefore, as illustrated in FIG. 6B, a worker can check for history of maintenance work with respect to the sensor 110B which has been connected to the adapter 120 before the current sensor 110C is connected to the adapter 120.

In the example of history of maintenance work illustrated in FIG. 6B, as history of the sensor device 10 (sensor device ID=AAAAA1608-01) in which the sensor 110B and the adapter 120 are combined, washing of the sensor 110B executed on August 10, 2016 at 15:32 is recorded in history H1, and calibration of the sensor 110B executed on August 24, 2016 at 13:02 is recorded in history H2. The two records of the history H1 and the history H2 indicate that maintenance work entailing no replacement of the sensor 110B has been carried out. The maintenance work entailing no replacement of the sensor 110B includes a state in which the sensor 110B is temporarily separated from the adapter 120, maintenance work is performed, and then the sensor 110B is reconnected to the adapter 120. That is, the maintenance work entailing no replacement of the sensor 110B also includes a case in which a sensor replacement command indicating that the sensor 110 has not been replaced is output (transmitted) in accordance with the failure notification output (transmitted) from the sensor device 10 (adapter 120) which is activated in a state in which the sensor 110B is reconnected after maintenance work of the sensor 110B is carried out.

In addition, in the example of history of maintenance work illustrated in FIG. 6B, replacement of the sensor 110B with the current sensor 110C performed on September 2, 2016 at 12:02, and update of the sensor device ID to the sensor device 10 (sensor device ID=AAAAA1609-01) in which the sensor 110C and the adapter 120 are combined are recorded in history H3. This record of the history H3 indicates that maintenance work in which the sensor 110B previously connected to the adapter 120 has been replaced with the sensor 110 currently connected to the adapter 120C. that is, sensor replacement work in which the sensor 110B has been replaced with the sensor 110C has been carried out.

In this manner, the sensor management device 20 can present maintenance work performed for each sensor device 10 (more specifically, for each adapter 120) to a worker by managing history of maintenance work for each adapter ID. That is, the sensor management device 20 can present maintenance work performed for each sensor device 10 to a worker regardless of whether or not the sensor 110 to be connected to the adapter 120 is equipped with an ID chip.

As described above, in the sensor management system 1, a case in which after the sensor device 10 is installed in the equipment, or after maintenance work is carried out with respect to the sensor device 10, the sensor device 10 and the sensor management device 20 are connected to each other and the sensor ID management processing starts when the sensor device 10 is activated has been described. However, depending on the configuration of the sensor device 10, there are cases in which the sensor ID management processing docs not necessarily have to be performed when the sensor device 10 is activated. An example of such a case will be described below.

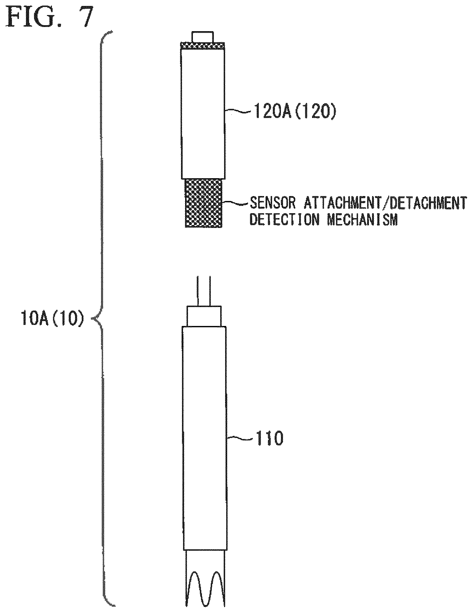

FIG. 7 is a view schematically illustrating an example of another configuration of the sensor device (sensor device 10) in the sensor management system 1 according to the embodiment of the present invention. In the description below, the other configuration of the sensor device 10 having the configuration illustrated in FIG. 7 will be referred to as a "sensor device 10A".

Similar to the sensor device 10, the sensor device 10A is also configured to include the sensor 110 and the adapter 120 which are connected (joined) to each other through a connector portion (not illustrated). In the sensor device 10A, the adapter 120 has a sensor attachment/detachment detection mechanism. In the description below, the adapter 120 including the sensor attachment/detachment detection mechanism which configures the sensor device 10A illustrated in FIG. 7 will be referred to as an "adapter 120A".

The sensor attachment/detachment detection mechanism included in the adapter 120A is configured to be a part of the structure of a connector portion (not illustrated). The sensor attachment/detachment detection mechanism detects whether or not the sensor 110 has been attached or detached with respect to the adapter 120A in the sensor device 10A. That is, the sensor attachment/detachment detection mechanism detects whether or not the sensor 110 has been temporarily separated from the adapter 120A and then the sensor 110 has been reconnected (rejoined) to the adapter 120A. The sensor attachment/detachment detection mechanism outputs a signal indicating the presence or absence of attachment or detachment of the detected sensor 110 (which will hereinafter be referred to as a "sensor attachment/detachment detection signal"), for example, to the sensor manager 122 included in the adapter 120A.

In the adapter 120A, the sensor manager 122 determines whether or not the above-described operation of the sensor manager 122 has been performed, based on the sensor attachment/detachment detection signal output from the sensor attachment/detachment detection mechanism.

More specifically, when the sensor attachment/detachment detection signal output from the sensor attachment/detachment detection mechanism indicates that the sensor 110 has been attached or detached with respect to the adapter 120A (presence of attachment or detachment), the sensor manager 122 determines that there is a possibility that sensor replacement work of the sensor 110 has been carried out, that is, the combination of the adapter 120A and the sensor 110 has been changed. In this case, as described above, the sensor manager 122 performs operations of reading the sensor ID from the sensor 110 and storing the read sensor ID, and an operation of outputting (transmitting) the adapter ID and the stored (read) sensor ID, or a failure notification to the sensor management device 20. Accordingly, in the sensor management system 1, the above-described sensor ID management processing is performed, so that succeeding management of the sensor device 10A can be performed with the combination of the current adapter 120A and the sensor 110.

Meanwhile, when a sensor attachment/detachment detection signal output from the sensor attachment/detachment detection mechanism indicates that the sensor 110 has not been attached or detached with respect to the adapter 120A (absence of attachment or detachment), the sensor manager 122 determines that sensor replacement work of the sensor 110 is not carried out, that is, the combination of the adapter 120A and the sensor 110 has not changed and remains as before. In this case, the sensor manager 122 does not perform the above-described operation and manages the sensor ID which is already stored, as the sensor ID of the connected sensor 110. Accordingly, in the sensor management system 1, the above-described sensor ID management processing is not performed, so that succeeding management of the sensor device 10A can be performed with the combination of the previous adapter 120A and the sensor 110.

In this manner, in the sensor management system 1, since the adapter 120 is caused to be the adapter 120A including the sensor attachment/detachment detection mechanism, the sensor ID management processing can be performed only when the sensor 110 is attached or detached with respect to the adapter 120A. Accordingly, in the sensor management system 1, it is possible to more easily manage a combination of the sensor 110 and the adapter 120A in the sensor device 10A.

The processing of the sensor manager 122 determining whether or not to perform an operation based on the sensor attachment/detachment detection signal output from the sensor attachment/detachment detection mechanism is processing performed before Step S100 in the flow chart of the sensor ID management processing illustrated in FIG. 2. As described above, the contents of the processing are only processing of determining whether or not to perform the sensor ID management processing. Therefore, detailed description regarding the processing procedure of the sensor management system 1 including the processing of the sensor manager 122 determined based on the sensor attachment/detachment detection signal output from the sensor attachment/detachment detection mechanism will be omitted.

In addition, as described above, in the sensor management system 1, the function of processing (sensor ID management processing) in which the combination of the sensor 110 and the adapter 120 in the sensor device 10 is managed by the sensor management device 20 can be performed with a portable terminal apparatus (maintenance terminal apparatus) which a worker carries. For example, it is possible to consider that this maintenance terminal apparatus includes a function of a camera capturing an image (which will hereinafter be referred to as a "camera function"). In this case, in the sensor management system 1, in place of virtually unique identification information (sensor ID) generated by the adapter 120 (more specifically, the sensor manager 122) in accordance with a sensor replacement command, it is possible to employ a sensor ID which more specifically indicates the sensor 110 connected to the adapter 120. An example of such a case will be described below.

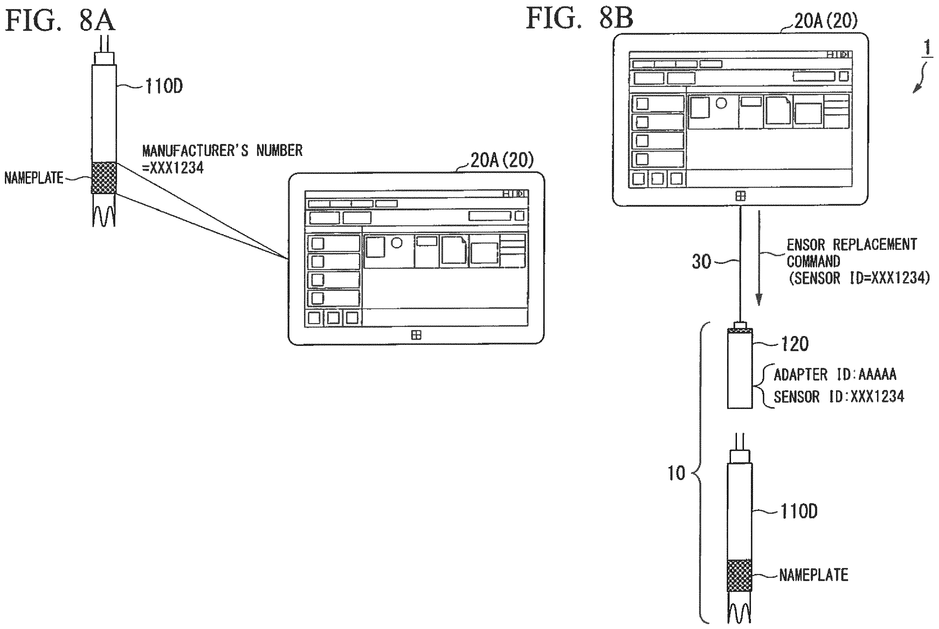

FIG. 8A and FIG. 8B are views schematically illustrating an example of another method of generating identification information (sensor ID) in the sensor management system 1 according to the embodiment of the present invention. In the description below, similar to the sensor management device 20, a maintenance terminal apparatus which realizes the function of the sensor ID management processing, in other words, a portable sensor management device 20 will be referred to as a "maintenance terminal apparatus 20A". FIG. 8A and FIG. 8B schematically illustrate a state in which a sensor 110D equipped with no ID chip is being connected (joined) to the adapter 120.

First, identification information of the sensor 110D itself is acquired by the maintenance terminal apparatus 20A before the sensor 110D equipped with no ID chip is connected (joined) to the adapter 120 via a connector portion (not illustrated). For example, the maintenance terminal apparatus 20A captures an image of the manufacturer's number or the like disclosed in the nameplate stuck on the sensor 110D by using the camera function included in the maintenance terminal apparatus 20A. The manufacturer's number of the sensor 110D is unique information such as a serial number which is assigned and set when the sensor 110D is manufactured. The drawing FIG. 8A schematically illustrates a state in which a worker operates the maintenance terminal apparatus 20A and manufacturer's number=XXX 1234 of the sensor 110D is acquired by using the camera function. The maintenance terminal apparatus 20A converts the manufacturer's number, which is included in the image captured by using the camera function, for example, a function of image recognition, into data that can be utilized as the sensor ID. Then, the maintenance terminal apparatus 20A stores the converted manufacturer's number as the identification information for identifying the sensor 110D. For example, the camera function included in the maintenance terminal apparatus 20A may be a part of functions of the interface manager 22 configuring the sensor management device 20 illustrated in FIG. 1. In addition, for example, the converted manufacturer's number may be stored in the sensor device manager 21 configuring the sensor management device 20 illustrated in FIG. 1. For example, the processing of converting the manufacturer's number, which is included in an image captured by using the camera function, into data that can be utilized as the sensor ID may be performed as a part of functions of the sensor device manager 21 or the interface manager 22 configuring the sensor management device 20 illustrated in FIG. 1.

The example in FIG. 8A illustrates a case in which the manufacturer's number of the sensor 110D is acquired as the sensor ID by using the camera function of the maintenance terminal apparatus 20A. However, the method of acquiring information which the maintenance terminal apparatus 20A can utilize as the sensor ID such as the manufacturer's number of the sensor 110D is not limited to the method of using the camera function, and any method may be employed. For example, a method in which a worker operates the maintenance terminal apparatus 20A and the manufacturer's number of the sensor 110D or the like is input as the sensor ID. In this case, for example, the function of inputting information through an operation of a worker may be a part of functions of the interface manager 22 configuring the sensor management device 20 illustrated in FIG. 1.

Thereafter, a worker connects (joins) the sensor 110D equipped with no ID chip to the adapter 120 via a connector portion (not illustrated) such that the sensor device 10 is configured, and the worker installs the configured sensor device 10 in equipment. Then, the worker connects the sensor device 10 and the maintenance terminal apparatus 20A to each other and causes the sensor device 10 to be activated.

When the sensor device 10 is activated in a state in which the sensor 110D equipped with no ID chip is connected (joined) to the adapter 120 via a connector portion (not illustrated), the adapter 120 outputs a failure notification for notifying that the sensor ID of the connected sensor 110D has not been able to be read to the maintenance terminal apparatus 20A via the communication path 30 in the sensor ID management processing (refer to Step S100, Step S110, and Step S121).

Similar to the sensor management device 20, the maintenance terminal apparatus 20A outputs (transmits) a sensor replacement command according to the failure notification that is output (transmitted) from the adapter 120, to the adapter 120 via the communication path 30 (refer to Step S200 to Step S220). In this case, the maintenance terminal apparatus 20A outputs (transmits) the manufacturer's number of the sensor 110D which is acquired and recorded by using the camera function, to the adapter 120 as the sensor ID of the sensor 110D together with the sensor replacement command.

The adapter 120 generates a new sensor ID for identifying the sensor 110D and stores (updates) the new sensor ID (refer to Step S300 to Step S320). However, since the sensor ID (manufacturer's number) of the sensor 110D is output (transmitted) from the maintenance terminal apparatus 20A together with the sensor replacement command, the adapter 120 stores the sensor ID (manufacturer's number) that is output (transmitted) from the maintenance terminal apparatus 20A, as a new sensor ID of the sensor 110D to be generated. In the example illustrated in FIG. 8B, adapter ID=AAAAA and sensor ID=XXX1234 that is output (transmitted) from the maintenance terminal apparatus 20A are stored.

The adapter 120 outputs (transmits) the adapter ID and the stored sensor ID to the maintenance terminal apparatus 20A via the communication path 30 (refer to Step S330). Accordingly, the maintenance terminal apparatus 20A causes the adapter ID and the sensor ID output (transmitted) from the adapter 120 to be associated with each other and stores the adapter ID and the sensor ID (refer to Step S400). Then, the sensor management device 20A performs succeeding management corresponding to the sensor device 10 with the combination of the sensor 110D and the adapter 120. For example, the maintenance terminal apparatus 20A performs succeeding management corresponding to the sensor device 10 in which the sensor 110D and the adapter 120 are combined, with sensor device ID=AAAAAXXX1234 obtained by binding adapter ID=AAAAA output (transmitted) from the adapter 120, and sensor ID=XXX1234.

As described above, it is possible to consider that the maintenance terminal apparatus 20A is connected to the sensor device 10 only during sensor replacement work. Therefore, as described above, in order to use the sensor device 10 in which the sensor 110D and the adapter 120 are combined in a normal operation, the information on the combination of the sensor 110 and the adapter 120 stored in the sensor management device 20 which operates in a normal operation is updated, for example, at the final stage in the sensor replacement work. However, when sensor replacement work is carried out by utilizing the maintenance terminal apparatus 20A, for example, it is possible to consider a configuration in which the maintenance terminal apparatus 20A performs an operation such that the maintenance terminal apparatus 20A is connected to the sensor management device 20 and a worker inputs required information for outputting a sensor replacement command (sensor replacement operation). That is, it is possible to consider a configuration of the sensor management device 20 and the maintenance terminal apparatus 20A realizing a function similar to that of the above-described sensor management device 20 in the sensor management system 1. In the case of this configuration, the maintenance terminal apparatus 20A operates as an input device for a worker inputting a sensor replacement operation. A sensor replacement command output (transmitted) by the maintenance terminal apparatus 20A, an acquire manufacturer's number of the sensor 110D (sensor ID), and the like are output (transmitted) to the sensor device 10 via the sensor management device 20 and the communication path 30. Therefore, in the case of this configuration, it is possible to consider that the information on the combination of the sensor 110D output (transmitted) by the sensor device 10 and the adapter 120 is also output (transmitted) to the maintenance terminal apparatus 20A via the communication path 30 and the sensor management device 20. That is, it is possible to consider that the information on the combination of the sensor 110D which is to be updated at the final stage in the sensor replacement work and the adapter 120 is information which is already present in the sensor management device 20. Therefore, in the case of the configuration of the sensor management device 20 and the maintenance terminal apparatus 20A realizing a function similar to that of the above-described sensor management device 20, it is possible to consider having a configuration in which the information on the combination of the sensor 110 and the adapter 120 does not have to be updated at the final stage in the sensor replacement work.

As described above, according to the embodiment of the present invention, when a sensor management module to which a sensor is connected (joined) and which configures a sensor device cannot acquire identification information for identifying the sensor from the sensor, virtually unique identification information for identifying this sensor is newly generated. More specifically, in the embodiment of the present invention, when the adapter 120 to which the sensor 110 is connected (joined) and which configures the sensor device 10 cannot acquire identification information (sensor ID) for identifying the sensor 110 from the sensor 110, virtually unique identification information (sensor ID) for identifying the sensor 110 is newly generated. In this case, in the embodiment of the present invention, when the adapter 120 cannot acquire the sensor ID from the sensor 110, a notification (failure notification) indicating that the adapter 120 has failed in acquiring the sensor ID is output. Then, when a sensor replacement command indicating that the sensor 110 has been replaced in accordance with this failure notification is output, a unique sensor ID corresponding to the sensor 110 of which the sensor ID has failed to be acquired is newly generated. Accordingly, in the embodiment of the present invention, the sensor management system (sensor management system 1) can manage the sensor device (sensor device 10) with the combination of the sensor (sensor 110) and the sensor management module (adapter 120) regardless of whether or not the sensor management module (adapter 120) can acquire identification information (sensor ID) from the sensor (sensor 110).

In addition, according to the embodiment of the present invention, when a notification (failure notification) indicating that the sensor management system has failed in acquiring identification information for identifying the sensor from the sensor management module is output (transmitted), a sensor replacement command indicating whether or not the sensor has been replaced is output to the sensor management module. More specifically, in the embodiment of the present invention, when a notification (failure notification) indicating that the sensor management device 20 configuring the sensor management system 1 has failed in acquiring identification information (sensor ID) for identifying the sensor 110 from the adapter 120 is output (transmitted), a sensor replacement command indicating whether or not the sensor 110 has been replaced is output to the adapter 120. In this case, in the embodiment of the present invention, when a failure notification is output (transmitted) from the adapter 120, the sensor management device 20 urges a worker carrying out sensor replacement work to perform an operation of inputting required information for outputting a sensor replacement command (sensor replacement operation). Accordingly, in the embodiment of the present invention, the sensor management device 20 can output (transmit) a sensor replacement command according to the sensor replacement operation performed by a worker to the adapter 120, and the adapter 120 can newly generate a virtually unique sensor ID for identifying the sensor 110 of which the sensor ID has failed to be acquired, in accordance with the sensor replacement command. Consequently, in the embodiment of the present invention, the sensor management system (sensor management system 1) can manage the sensor device (sensor device 10) with the combination of the sensor (sensor 110) and the sensor management module (adapter 120) regardless of whether or not the sensor management module (adapter 120) can acquire identification information (sensor ID) for identifying the sensor (sensor 110) from the sensor (sensor 110).

Consequently, in the embodiment of the present invention, in the sensor management system including a separable sensor device having a configuration in which a sensor can be separated, even when a sensor management module to which the sensor is connected (joined) and which configures the sensor device cannot acquire identification information for identifying the sensor, it is possible to manage the combination of the sensor and the sensor management module.

For example, a program for realizing processing performed by each of the constituent elements configuring the adapter 120, the sensor management device 20, and the sensor management system I as illustrated in FIG. 1 may be recorded in a computer readable storage medium, and the program recorded in the storage medium may be read and executed by a computer system, such that various steps of the processing described above according to the adapter 120, the sensor management device 20, and the sensor management system 1 of the present embodiment may be performed. The aforementioned "computer system" may be include hardware such as an operating system and peripherals. In addition, when the WWW system is utilized, the "computer system" also includes a homepage-provided environment (or a display environment). In addition, the "computer readable storage medium" denotes a writable non-volatile memory such as a flexible disk, a magneto optical disk, a ROM, and a flash memory; a portable medium such as a CD-ROM; and a storage device such as a hard disk embedded in the computer system.

Moreover, the "computer readable storage medium" includes a storage medium which retains a program for a certain time, such as a server in a case in which the program is transmitted via a network such as Internet, or a communication line such as a telephone line; and a volatile memory (for example, a dynamic random access memory (DRAM)) inside a computer system which will become a client. In addition, the program may be transmitted to a different computer system from the computer system in which the program is stored in a storage device or the like via a transmission medium or through transmission waves in the transmission medium. Here, the "transmission medium" for transmitting the program denotes a medium having a function of transmitting information, including a network (communication network) such as Internet, and a communication line such as a telephone line. In addition, the program may be provided in order to realize a part of the above-described functions. Moreover, the program may realize the above-described functions in a form of a combination with a program which has already been recorded in the computer system, that is, a so-called differential file (differential program).

As used herein, the following directional terms "front, back, above, downward, right, left, vertical, horizontal, below, transverse, row and column" as well as any other similar directional terms refer to those instructions of a device equipped with the present invention. Accordingly, these terms, as utilized to describe the present invention should be interpreted relative to a device equipped with the present invention.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of the present invention.

The term "unit" is used to describe a component, unit or part of a hardware and/or software that is constructed and/or programmed to carry out the desired function. Typical examples of the hardware may include, but are not limited to, a device and a circuit.

While preferred embodiments of the present invention have been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the claims.

## Claims

1. A sensor management module (120) comprising a connector to connect to a sensor (110) in a sensor device (10), the sensor management module (120) comprising:
a sensor ID reader (121) configured to acquire sensor identification information for identifying the sensor (110) from the sensor (110); and
a sensor manager (122) configured to store module identification information for identifying the sensor management module (120),
**characterized in that**
if the sensor ID reader (121) has acquired the sensor identification information, the sensor manager (122) is configured to store the sensor identification information acquired by the sensor ID reader (121) and the module identification information in association with each other, and
if the sensor ID reader (121) has not acquired the sensor identification information, the sensor manager (122) is configured to output a failure notification indicating that the sensor identification information has not been acquired, configured to newly generate a unique new identification information for identifying the sensor (110) as the sensor identification information based on a sensor replacement command input into the sensor management module (120) in accordance with the failure notification, and configured to store the new identification information and the module identification information in association with each other.

2. The sensor management module (120) according to claim 1,
wherein if the sensor ID reader (121) has not acquired the sensor identification information, the sensor manager (122) is configured to output a failure notification indicating that the sensor identification information has not been acquired, and the sensor manager (122) is configured to generate the new identification information based on a sensor replacement command input into the sensor management module (120) in accordance with the failure notification.

3. The sensor management module (120) according to claim 2,
wherein if the sensor replacement command indicates that the sensor (110) has been replaced, the sensor manager (122) is configured to generate the new identification information, and
wherein if the sensor replacement command indicates that the sensor (110) has not been replaced, the sensor manager (122) is configured not to generate the new identification information, and uses the stored sensor identification information as the new identification information.

4. The sensor management module (120) according to claim 2 or 3,
wherein if the sensor (110) has been attached or detached, the sensor manager (122) is configured to output the failure notification, and
wherein if the sensor (110) has not been attached or detached, the sensor manager (122) is configured not to output the failure notification.

5. The sensor management module (120) according to any one of claims 2 to 4,
wherein if identification information for identifying the sensor (110) has been input into the sensor management module (120) together with the sensor replacement command, the sensor manager (122) uses the identification information input together with the sensor replacement command as the new identification information.

6. The sensor management module (120) according to any one of claims 1 to 5, further comprising:
a sensor attachment/detachment detection mechanism configured to detect an attachment and a detachment of the sensor (110) and output a sensor attachment/detachment detection signal,
wherein the sensor manager (122) is configured to determine whether or not the sensor (110) has been attached or detached based on the sensor attachment/detachment detection signal output from the sensor attachment/detachment detection mechanism.

7. The sensor management module (120) according to any one of claims 1 to 6,
wherein the sensor management module (120) is configured to start processing for acquiring the sensor identification information when the sensor management module (120) has been activated, and the sensor management module (120) is configured to output the module identification information for identifying the sensor management module (120) and the sensor identification information stored by the sensor manager (122).

8. The sensor management module (120) according to claim 7, further comprises:
a communication manager (123) configured to transmit the sensor identification information, the module identification information, and the failure notification, and the communication manager (123) being configured to receive a sensor replacement command.

9. A sensor management system (1) comprising:
a sensor management module (120) according to any one of claims 1 to 8 ; and
a sensor management device (20) configured to manage a combination of the sensor management module (120) and the sensor (110).

10. The sensor management system (1) according to claim 9,
wherein the sensor management device (20) comprises:
an interface manager (22) configured to display a display screen for urging to perform a sensor replacement operation of inputting information required for outputting the sensor replacement command in accordance with the failure notification, and receive information on the sensor replacement operation input based on the display screen; and
a sensor device manager (21) configured to output the sensor replacement command based on the information on the sensor replacement operation received by the interface manager (22), and associate the module identification information with the sensor identification information output from the sensor management module (120) to manage the combination of the sensor management module (120) and the sensor (110).

11. The sensor management system (1) according to claim 10,
wherein the sensor replacement operation is an operation of inputting at least information indicating whether the sensor (110) has been replaced or not, and
wherein the sensor device manager (21) is configured to output the sensor replacement command comprising the information indicating whether the sensor (110) has been replaced or not.

12. The sensor management system (1) according to claim 11,
wherein if identification information for identifying the sensor (110) has been input, the sensor device manager (21) is configured to output the sensor replacement command comprising the identification information which has been input.

13. A sensor management method performed by a sensor management module (120) comprising a connector to connect to a sensor (110) in a sensor device (10), the sensor management method comprising:
acquiring, by a sensor ID reader (121), sensor identification information for identifying the sensor (110) from the sensor (110); and
storing, by a sensor manager (122), module identification information for identifying the sensor management module (120);
**characterized by**
if the sensor ID reader (121) has acquired the sensor identification information, storing, by the sensor manager (122), the sensor identification information acquired by the sensor ID reader (121) and the module identification information in association with each other; and
if the sensor ID reader (121) has not acquired the sensor identification information, newly generating, by the sensor manager (122), a unique new identification information for identifying the sensor (110) as the sensor identification information based on a sensor replacement command input into the sensor management module (120) in accordance with the failure notification, and storing, by the sensor manager (122), the new identification information and the module identification information in association with each other.

14. A program comprising instructions which, when the program is executed by a computer of a sensor management module (120) comprising a connector to connect to a sensor (110), cause the computer to carry out steps of:
acquiring, by a sensor ID reader (121), sensor identification information for identifying the sensor (110) from the sensor (110); and
storing, by a sensor manager (122), module identification information for identifying the sensor management module (120);
**characterized by**
if the sensor ID reader (121) has acquired the sensor identification information, storing, by the sensor manager (122), the sensor identification information acquired by the sensor ID reader (121) and the module identification information in association with each other; and
if the sensor ID reader (121) has not acquired the sensor identification information, newly generating, by the sensor manager (122), a unique new identification information for identifying the sensor (110) as the sensor identification information based on a sensor replacement command input into the sensor management module (120) in accordance with the failure notification, and storing, by the sensor manager (122), the new identification information and the module identification information in association with each other.

15. A non-transitory computer readable storage medium storing a program comprising instructions which, when executed by a computer of a sensor management module (120) comprising a connector to connect to a sensor (110), cause the computer to carry out steps of: acquiring, by a sensor ID reader (121), sensor identification information for identifying the sensor (110) from the sensor (110); and
storing, by a sensor manager (122), module identification information for identifying the sensor management module (120);
**characterized by**
if the sensor ID reader (121) has acquired the sensor identification information, storing, by the sensor manager (122), the sensor identification information acquired by the sensor ID reader (121) and the module identification information in association with each other; and
if the sensor ID reader (121) has not acquired the sensor identification information, newly generating, by the sensor manager (122), a unique new identification information for identifying the sensor (110) as the sensor identification information based on a sensor replacement command input into the sensor management module (120) in accordance with the failure notification, and storing, by the sensor manager (122), the new identification information and the module identification information in association with each other.

## Patentansprüche

1. Sensor-Verwaltungsmodul (120), das einen Verbinder zum Verbinden mit einem Sensor (110) in einer Sensoreinrichtung (10) umfasst, wobei das Sensor-Verwaltungsmodul (120) umfasst:
eine Vorrichtung (121) zum Lesen einer Sensor-Kennung, die so eingerichtet ist, dass sie eine Sensor-Kennungsinformation zum Identifizieren des Sensors (110) von dem Sensor (110) erfasst; und
eine Sensor-Verwaltungsvorrichtung (122), die so eingerichtet ist, dass sie eine Modul-Kennungsinformation zum Identifizieren des Sensor-Verwaltungsmoduls (120) speichert,
**dadurch gekennzeichnet, dass**
die Sensor-Verwaltungsvorrichtung (122) so eingerichtet ist, dass sie, wenn die Vorrichtung (121) zum Lesen einer Sensor-Kennung die Sensor-Kennungsinformation erfasst hat, die durch die Vorrichtung(121) zum Lesen einer Sensor-Kennung erfasste Sensor-Kennungsinformation sowie die Modul-Kennungsinformation in Verbindung miteinander speichert, und
die Sensor-Verwaltungsvorrichtung (122) so eingerichtet ist, dass sie, wenn die Vorrichtung (121) zum Lesen einer Sensor-Kennung die Sensor-Kennungsinformation nicht erfasst hat, eine Fehlerbenachrichtigung ausgibt, die anzeigt, dass die Sensor-Kennungsinformation nicht erfasst worden ist, so eingerichtet ist, dass sie eine eindeutige neue Kennungsinformation zum Identifizieren des Sensors (110) als die Sensor-Kennungsinformation auf Basis eines Sensor-Austauschbefehls neu erzeugt, der in das Sensor-Verwaltungsmodul (120) entsprechend der Fehlerbenachrichtigung eingegeben wird, und so eingerichtet ist, dass sie die neue Kennungsinformation und die Modul-Kennungsinformation in Verbindung miteinander speichert.

2. Sensor-Verwaltungsmodul (120) nach Anspruch 1,
wobei, die Sensor-Verwaltungsvorrichtung (122) so eingerichtet ist, dass sie, wenn die Vorrichtung (121) zum Lesen einer Sensor-Kennung die Sensor-Kennungsinformation nicht erfasst hat, eine Fehlerbenachrichtigung ausgibt, die anzeigt, dass die Sensor-Kennungsinformation nicht erfasst worden ist, und die Sensor-Verwaltungsvorrichtung (122) so eingerichtet ist, dass sie die neue Kennungsinformation auf Basis eines Sensor-Austauschbefehls erzeugt, der entsprechend der Fehlerbenachrichtigung in das Sensor-Verwaltungsmodul (120) eingegeben wird.

3. Sensor-Verwaltungsmodul (120) nach Anspruch 2,
wobei die Sensor-Verwaltungsvorrichtung (122) so eingerichtet ist, dass sie, wenn der Sensor-Austauschbefehl anzeigt, dass der Sensor (110) ausgetauscht worden ist, die neue Kennungsinformation erzeugt, und
wobei die Sensor-Verwaltungsvorrichtung (122) so eingerichtet ist, dass sie, wenn der Sensor-Austauschbefehl anzeigt, dass der Sensor (110) nicht ausgetauscht worden ist, die neue Kennungsinformation nicht erzeugt und die gespeicherte Sensor-Kennungsinformation als die neue Kennungsinformation verwendet.

4. Sensor-Verwaltungsmodul (120) nach Anspruch 2 oder 3,
wobei die Sensor-Verwaltungsvorrichtung (122) so eingerichtet ist, dass sie, wenn der Sensor (110) montiert oder demontiert worden ist, die Fehlerbenachrichtigung ausgibt, und
die Sensor-Verwaltungsvorrichtung (122) so eingerichtet ist, dass sie, wenn der Sensor (110) nicht montiert oder demontiert worden ist, die Fehlerbenachrichtigung nicht ausgibt.

5. Sensor-Verwaltungsmodul (120) nach einem der Ansprüche 2 bis 4,
wobei, wenn die Kennungsinformation zum Identifizieren des Sensors (110) zusammen mit dem Sensor-Austauschbefehl in das Sensor-Verwaltungsmodul (120) eingegeben worden ist, die Sensor-Verwaltungsvorrichtung (122) die zusammen mit dem Sensor-Austauschbefehl eingegebene Kennungsinformation als die neue Kennungsinformation verwendet.

6. Sensor-Verwaltungsmodul (120) nach einem der Ansprüche 1 bis 5, das des Weiteren umfasst:
einen Mechanismus zur Erfassung von Montage/Demontage des Sensors, der so eingerichtet ist, dass er eine Montage und eine Demontage des Sensors (110) erkennt und ein Signal zur Erfassung von Montage/Demontage des Sensors ausgibt,
wobei die Sensor-Verwaltungsvorrichtung (122) so eingerichtet ist, dass sie auf Basis des von dem Mechanismus zur Erfassung von Montage/Demontage des Sensors ausgegebenen Signals zur Erfassung von Montage/Demontage des Sensors feststellt, ob der Sensor (110) montiert oder demontiert worden ist.

7. Sensor-Verwaltungsmodul (120) nach einem der Ansprüche 1 bis 6,
wobei das Sensor-Verwaltungsmodul (120) so eingerichtet ist, dass es mit Verarbeitung zum Erfassen der Sensor-Kennungsinformation beginnt, wenn das Sensor-Verwaltungsmodul (120) aktiviert worden ist, und das Sensor-Verwaltungsmodul (120) so eingerichtet ist, dass es die Modul-Kennungsinformation zum Identifizieren des Sensor-Verwaltungsmoduls (120) und die durch die Sensor-Verwaltungsvorrichtung (122) gespeicherte Sensor-Kennungsinformation ausgibt.

8. Sensor-Verwaltungsmodul (120) nach Anspruch 7, des Weiteren umfassend:
eine Kommunikations-Verwaltungsvorrichtung (123), die so eingerichtet ist, dass sie die Sensor-Kennungsinformation, die Modul-Kennungsinformation und die Fehlerbenachrichtigung sendet, wobei die Kommunikations-Verwaltungsvorrichtung (123) so eingerichtet ist, dass sie einen Sensor-Austauschbefehl empfängt.

9. Sensor-Verwaltungssystem (1), das umfasst:
ein Sensor-Verwaltungsmodul (120) nach einem der Ansprüche 1 bis 8; sowie
eine Sensor-Verwaltungseinrichtung (20), die so eingerichtet ist, dass sie eine Kombination aus dem Sensor-Verwaltungsmodul (120) und dem Sensor (110) verwaltet.

10. Sensor-Verwaltungssystem (1) nach Anspruch 9,
wobei die Sensor-Verwaltungseinrichtung (20) umfasst:
eine Schnittstellen-Verwaltungsvorrichtung (22), die so eingerichtet ist, dass sie einen Anzeigebildschirm anzeigt, mit dem aufgefordert wird, einen Sensor-Austauschbetätigungsvorgang durchzuführen, mit dem Informationen eingegeben werden, die zum Ausgeben des Sensor-Austauschbefehls entsprechend der Fehlerbenachrichtigung erforderlich sind, und Informationen über den Sensor-Austauschbetätigungsvorgang empfängt, die an dem Anzeigebildschirm eingegeben werden; sowie
eine Sensoreinrichtungs-Verwaltungsvorrichtung (21), die so eingerichtet ist, dass sie den Sensor-Austauschbefehl auf Basis der durch die Schnittstellen-Verwaltungsvorrichtung (22) empfangenen Informationen über den Sensor-Austauschbetätigungsvorgang ausgibt und die Modul-Kennungsinformation mit der von dem Sensor-Verwaltungsmodul (120) ausgegebenen Sensor-Kennungsinformation verknüpft, um die Kombination aus dem Sensor-Verwaltungsmodul (120) und dem Sensor (110) zu verwalten.

11. Sensor-Verwaltungssystem (1) nach Anspruch 10,
wobei der Sensor-Austauschbetätigungsvorgang ein Vorgang ist, bei dem wenigstens eine Information eingegeben wird, die anzeigt, ob der Sensor (110) ausgetauscht worden ist, und
wobei die Sensoreinrichtungs-Verwaltungsvorrichtung (21) so eingerichtet ist, dass sie den Sensor-Austauschbefehl ausgibt, der die Information umfasst, die anzeigt, ob der Sensor (110) ausgetauscht worden ist.

12. Sensor-Verwaltungssystem (1) nach Anspruch 11,
wobei die Sensoreinrichtungs-Verwaltungsvorrichtung (21) so eingerichtet ist, dass sie, wenn eine Kennungsinformation zum Identifizieren des Sensors (110) eingegeben worden ist, den Sensor-Austauschbefehl ausgibt, der die Kennungsinformation umfasst, die eingegeben worden ist.

13. Sensor-Verwaltungsverfahren, das von einem Sensor-Verwaltungsmodul (120) durchgeführt wird, das einen Verbinder zum Verbinden mit einem Sensor (110) in einer Sensoreinrichtung (10) umfasst, wobei das Sensor-Verwaltungsverfahren umfasst:
Erfassen einer Sensor-Kennungsinformation zum Identifizieren des Sensors (110) von dem Sensor (110) durch eine Vorrichtung (121) zum Lesen einer Sensor-Kennung; sowie Speichern einer Modul-Kennungsinformation zum Identifizieren des Sensor-Verwaltungsmoduls (120) durch eine Sensor-Verwaltungsvorrichtung (122);
**gekennzeichnet durch**
Speichern der durch die Vorrichtung (121) zum Lesen einer Sensor-Kennung erfassten Sensor-Kennungsinformation sowie der Modul-Kennungsinformation in Verbindung miteinander durch die Sensor-Verwaltungsvorrichtung (122), wenn die Vorrichtung (121) zum Lesen einer Sensor-Kennung die Sensor-Kennungsinformation erfasst hat; und
neues Erzeugen einer eindeutigen neuen Kennungsinformation zum Identifizieren des Sensors (110) als die Sensor-Kennungsinformation auf Basis eines Sensor-Austauschbefehls, der in das Sensor-Verwaltungsmodul (120) entsprechend der Fehlerbenachrichtigung eingegeben wird, durch die Sensor-Verwaltungsvorrichtung (122), und Speichern der neuen Kennungsinformation sowie der Modul-Identifikationsinformation in Verbindung miteinander durch die Sensor-Verwaltungsvorrichtung (122), wenn die Vorrichtung (121) zum Lesen einer Sensor-Kennung die Sensor-Kennungsinformation nicht erfasst hat.

14. Programm, das Befehle, umfasst, die wenn das Programm durch einen Computer eines Sensor-Verwaltungsmoduls (120) ausgeführt wird, das einen Verbinder zum Verbinden mit einem Sensor (110) umfasst, den Computer veranlasst, folgende Schritte auszuführen:
Erfassen einer Sensor-Kennungsinformation zum Identifizieren des Sensors (110) von dem Sensor (110) durch eine Vorrichtung (121) zum Lesen einer Sensor-Kennung; sowie
Speichern einer Modul-Kennungsinformation zum Identifizieren des Sensor-Verwaltungsmoduls (120) durch eine Sensor-Verwaltungsvorrichtung (122);
**gekennzeichnet durch**
Speichern der durch die Vorrichtung (121) zum Lesen einer Sensor-Kennung erfassten Sensor-Kennungsinformation und der Modul-Kennungsinformation in Verbindung miteinander durch die Sensor-Verwaltungsvorrichtung (122), wenn die Vorrichtung (121) zum Lesen einer Sensor-Kennung die Sensor-Kennungsinformation erfasst hat; und
neues Erzeugen einer eindeutigen neuen Kennungsinformation zum Identifizieren des Sensors (110) als die Sensor-Kennungsinformation auf Basis eines Sensor-Austauschbefehls, der in das Sensor-Verwaltungsmodul (120) entsprechend der Fehlerbenachrichtigung eingegeben wird, durch die Sensor-Verwaltungsvorrichtung (122), und Speichern der neuen Kennungsinformation sowie der Modul-Identifikationsinformation in Verbindung miteinander durch die Sensor-Verwaltungsvorrichtung (122), wenn die Vorrichtung (121) zum Lesen einer Sensor-Kennung die Sensor-Kennungsinformation nicht erfasst hat.

15. Nichtflüchtiges computerlesbares Speichermedium, das ein Programm speichert, das Befehle umfasst, die wenn das Programm durch einen Computer eines Sensor-Verwaltungsmoduls (120) ausgeführt wird, das einen Verbinder zum Verbinden mit einem Sensor (110) umfasst, den Computer veranlasst, folgende Schritte auszuführen:
Erfassen einer Sensor-Kennungsinformation zum Identifizieren des Sensors (110) von dem Sensor (110) durch eine Vorrichtung (121) zum Lesen einer Sensor-Kennung; sowie
Speichern einer Modul-Kennungsinformation zum Identifizieren des Sensor-Verwaltungsmoduls (120) durch eine Sensor-Verwaltungsvorrichtung (122);
**gekennzeichnet durch**
Speichern der durch die Vorrichtung (121) zum Lesen einer Sensor-Kennung erfassten Sensor-Kennungsinformation und der Modul-Kennungsinformation in Verbindung miteinander durch die Sensor-Verwaltungsvorrichtung (122), wenn die Vorrichtung (121) zum Lesen einer Sensor-Kennung die Sensor-Kennungsinformation erfasst hat; und
neues Erzeugen einer eindeutigen neuen Kennungsinformation zum Identifizieren des Sensors (110) als die Sensor-Kennungsinformation auf Basis eines Sensor-Austauschbefehls, der in das Sensor-Verwaltungsmodul (120) entsprechend der Fehlerbenachrichtigung eingegeben wird, durch die Sensor-Verwaltungsvorrichtung (122), und Speichern der neuen Kennungsinformation sowie der Modul-Identifikationsinformation in Verbindung miteinander durch die Sensor-Verwaltungsvorrichtung (122), wenn die Vorrichtung (121) zum Lesen einer Sensor-Kennung die Sensor-Kennungsinformation nicht erfasst hat.

## Revendications

1. Module de gestion de capteur (120) comprenant un connecteur permettant d'établir une connexion à un capteur (110) dans un dispositif de détection (10), le module de gestion de capteur (120) comprenant :
un lecteur d'identificateur de capteur (121) configuré pour acquérir des informations d'identification de capteur permettant d'identifier le capteur (110) à partir du capteur (110), et
un gestionnaire de capteur (122) configuré pour stocker des informations d'identification de module permettant d'identifier le module de gestion de capteur (120),
**caractérisé en ce que**
si le lecteur d'identificateur de capteur (121) a acquis les informations d'identification de capteur, le gestionnaire de capteur (122) est configuré pour stocker les informations d'identification de capteur acquises par le lecteur d'identificateur de capteur (121) et les informations d'identification de module associées les unes aux autres, et
si le lecteur d'identificateur de capteur (121) n'a pas acquis les informations d'identification de capteur, le gestionnaire de capteur (122) est configuré pour délivrer en sortie une notification de défaillance indiquant que les informations d'identification de capteur n'ont pas été acquises, il est configuré pour générer à nouveau en tant qu'informations d'identification de capteur de nouvelles informations uniques d'identification permettant d'identifier le capteur (110) sur la base d'une commande de remplacement de capteur entrée dans le module de gestion de capteur (120) en fonction de la notification de défaillance, et il est configuré pour stocker les nouvelles informations d'identification et les informations d'identification de module associées les unes aux autres.

2. Module de gestion de capteur (120) selon la revendication 1,
dans lequel, si le lecteur d'identificateur de capteur (121) n'a pas acquis les informations d'identification de capteur, le gestionnaire de capteur (122) est configuré pour délivrer en sortie une notification de défaillance indiquant que les informations d'identification de capteur n'ont pas été acquises, et le gestionnaire de capteur (122) est configuré pour générer de nouvelles informations d'identification sur la base d'une commande de remplacement de capteur entrée dans le module de gestion de capteur (120) en fonction de la notification de défaillance.

3. Module de gestion de capteur (120) selon la revendication 2,
dans lequel, si la commande de remplacement de capteur indique que le capteur (110) a été remplacé, le gestionnaire de capteur (122) est configuré pour générer les nouvelles informations d'identification, et
dans lequel, si la commande de remplacement de capteur indique que le capteur (110) n'a pas été remplacé, le gestionnaire de capteur (122) est configuré pour ne pas générer les nouvelles informations d'identification, et il utilise les informations d'identification de capteur stockées comme nouvelles informations d'identification.

4. Module de gestion de capteur (120) selon la revendication 2 ou la revendication 3,
dans lequel, si le capteur (110) a été fixé ou détaché, le gestionnaire de capteur (122) est configuré pour délivrer en sortie la notification de défaillance, et
dans lequel, si le capteur (110) n'a pas été fixé ni détaché, le gestionnaire de capteur (122) est configuré pour ne pas délivrer en sortie la notification de défaillance.

5. Module de gestion de capteur (120) selon l'une quelconque des revendications 2 à 4,
dans lequel, si les informations d'identification permettant d'identifier le capteur (110) ont été reçues en entrée du module de gestion de capteur (120) en même temps que la commande de remplacement de capteur, le gestionnaire de capteur (122) utilise les informations d'identification reçues en même temps que la commande de remplacement de capteur comme nouvelles informations d'identification.

6. Module de gestion de capteur (120) selon l'une quelconque des revendications 1 à 5, comprenant en outre :
un mécanisme de détection de fixation ou de séparation de capteur configuré pour détecter la fixation et la séparation du capteur (110) et pour délivrer en sortie un signal de détection de fixation ou séparation de capteur,
dans lequel le gestionnaire de capteur (122) est configuré pour déterminer si le capteur (110) a été ou non fixé ou détaché sur la base du signal de détection de fixation ou séparation de capteur en sortie du mécanisme de détection de fixation ou séparation de capteur.

7. Module de gestion de capteur (120) selon l'une quelconque des revendications 1 à 6,
où le module de gestion de capteur (120) est configuré pour démarrer le traitement permettant l'acquisition des informations d'identification de capteur lorsque le module de gestion de capteur (120) a été activé, et le module de gestion de capteur (120) est configuré pour délivrer en sortie les informations d'identification de module permettant l'identification du module de gestion de capteur (120) et les informations d'identification de capteur stockées par le gestionnaire de capteur (122).

8. Module de gestion de capteur (120) selon la revendication 7, comprenant en outre :
un gestionnaire de communication (123) configuré pour transmettre les informations d'identification de capteur, les informations d'identification de module et la notification de défaillance, et le gestionnaire de communication (123) est configuré pour recevoir une commande de remplacement de capteur.

9. Système de gestion de capteur (1) comprenant :
un module de gestion de capteur (120) conforme à l'une quelconque des revendications 1 à 8, et
un dispositif de gestion de capteur (20) configuré pour gérer une combinaison du module de gestion de capteur (120) et du capteur (110).

10. Système de gestion de capteur (1) selon la revendication 9,
dans lequel le dispositif de gestion de capteur (20) comprend :
un gestionnaire d'interface (22) configuré pour afficher un écran permettant de solliciter l'exécution d'une opération de remplacement de capteur consistant à entrer des informations requises pour délivrer en sortie la commande de remplacement de capteur en fonction de la notification de défaillance, et à recevoir des informations concernant l'opération de remplacement de capteur qui ont été entrées sur la base de l'écran d'affichage, et
un gestionnaire de dispositif de détection (21) configuré pour délivrer en sortie la commande de remplacement de capteur sur la base des informations concernant l'opération de remplacement de capteur reçues par le gestionnaire d'interface (22), et pour associer les informations d'identification de module aux informations d'identification de capteur en sortie du module de gestion de capteur (120) dans le but de gérer la combinaison du module de gestion de capteur (120) et du capteur (110).

11. Système de gestion de capteur (1) selon la revendication 10,
dans lequel l'opération de remplacement de capteur est une opération consistant à appliquer en entrée au moins des informations indiquant si le capteur (110) a été remplacé ou non, et
dans lequel le gestionnaire de dispositif de détection (21) est configuré pour délivrer en sortie la commande de remplacement de capteur comprenant les informations indiquant si le capteur (110) a été remplacé ou non.

12. Système de gestion de capteur (1) selon la revendication 11,
dans lequel, si des informations d'identification permettant d'identifier le capteur (110) ont été reçues en entrée, le gestionnaire de dispositif de détection (21) est configuré pour délivrer en sortie la commande de remplacement de capteur comprenant les informations d'identification qui ont été reçues en entrée.

13. Procédé de gestion de capteur effectué par un module de gestion de capteur (120) comprenant un connecteur permettant d'établir une connexion à un capteur (110) dans un dispositif de détection (10), le procédé de gestion de capteur comprenant :
l'acquisition, par un lecteur d'identificateur de capteur (121), d'informations d'identification de capteur permettant d'identifier le capteur (110) à partir du capteur (110), et
le stockage, par un gestionnaire de capteur (122), d'informations d'identification de module permettant d'identifier le module de gestion de capteur (120),
**caractérisé par** :
si le lecteur d'identificateur de capteur (121) a acquis les informations d'identification de capteur, le stockage, par le gestionnaire de capteur (122), des informations d'identification de capteur acquises par le lecteur d'identificateur de capteur (121) et des informations d'identification de module associées les unes aux autres, et
si le lecteur d'identificateur de capteur (121) n'a pas acquis les informations d'identification de capteur, la génération à nouveau comme informations d'identification de capteur, par le gestionnaire de capteur (122), de nouvelles informations uniques d'identification permettant d'identifier le capteur (110), sur la base d'une commande de remplacement de capteur entrée dans le module de gestion de capteur (120) en fonction de la notification de défaillance, et le stockage, par le gestionnaire de capteur (122), des nouvelles informations d'identification et des informations d'identification de module associées les unes aux autres.

14. Programme comprenant des instructions qui, lorsque le programme est exécuté par l'ordinateur d'un module de gestion de capteur (120) comprenant un connecteur permettant d'établir une connexion à un capteur (110), amènent l'ordinateur à exécuter les étapes suivantes :
l'acquisition, par un lecteur d'identificateur de capteur (121), d'informations d'identification de capteur permettant d'identifier le capteur (110) à partir du capteur (110), et
le stockage, par un gestionnaire de capteur (122), d'informations d'identification de module permettant d'identifier le module de gestion de capteur (120),
**caractérisé par** :
si le lecteur d'identificateur de capteur (121) a acquis les informations d'identification de capteur, le stockage, par le gestionnaire de capteur (122), des informations d'identification de capteur acquises par le lecteur d'identificateur de capteur (121) et des informations d'identification de module associées les unes aux autres, et
si le lecteur d'identificateur de capteur (121) n'a pas acquis les informations d'identification de capteur, la génération à nouveau comme informations d'identification de capteur, par le gestionnaire de capteur (122), de nouvelles informations uniques d'identification permettant d'identifier le capteur (110), sur la base d'une commande de remplacement de capteur entrée dans le module de gestion de capteur (120) en fonction de la notification de défaillance, et le stockage, par le gestionnaire de capteur (122), des nouvelles informations d'identification et des informations d'identification de module associées les unes aux autres.

15. Support de stockage non transitoire pouvant être lu par ordinateur stockant un programme comprenant des instructions qui, lorsqu'elles sont exécutées par l'ordinateur d'un module de gestion de capteur (120) comprenant un connecteur permettant d'établir une connexion à un capteur (110), amènent l'ordinateur à exécuter les étapes suivantes :
l'acquisition, par un lecteur d'identificateur de capteur (121), d'informations d'identification de capteur permettant d'identifier le capteur (110) à partir du capteur (110), et
le stockage, par un gestionnaire de capteur (122), d'informations d'identification de module permettant d'identifier le module de gestion de capteur (120),
**caractérisé par** :
si le lecteur d'identificateur de capteur (121) a acquis les informations d'identification de capteur, le stockage, par le gestionnaire de capteur (122), des informations d'identification de capteur acquises par le lecteur d'identificateur de capteur (121) et des informations d'identification de module associées les unes aux autres, et
si le lecteur d'identificateur de capteur (121) n'a pas acquis les informations d'identification de capteur, la génération à nouveau comme informations d'identification de capteur, par le gestionnaire de capteur (122), de nouvelles informations uniques d'identification permettant d'identifier le capteur (110), sur la base d'une commande de remplacement de capteur entrée dans le module de gestion de capteur (120) en fonction de la notification de défaillance, et le stockage, par le gestionnaire de capteur (122), des nouvelles informations d'identification et des informations d'identification de module associées les unes aux autres.
